# EUROPEAN PATENT APPLICATION

(11) **EP 4 302 960 A1**
(43) Date of publication of application: **10.01.2024**
(21) Application number: 21929173.9
(22) Date of filing: 01.11.2021
(51) Int. Cl.: B29C 45/00, B29C 69/02, B29C 65/30, B29C 65/78

(54) **RESIN FORMED ARTICLE PRODUCTION DEVICE, RESIN FORMED ARTICLE PRODUCTION METHOD, AND MOLD**

(30) Priority: 02.03.2021 JP 2021032385
(71) Applicant: The Japan Steel Works, Ltd., Tokyo 141-0032 (JP)
(72) Inventor: NAKAYAMA, Kiyotaka, Tokyo 141-0032 (JP); NAITO, Akihiro, Tokyo 141-0032 (JP); UEMURA, Takashi, Tokyo 141-0032 (JP); SUSA, Keigo, Tokyo 141-0032 (JP); MATSUZAKI, Koji, Tokyo 141-0032 (JP); NISHIDA, Shoso, Hiroshima-shi Hiroshima 739-1751 (JP)
(74) Representative: Locas, Davide
(86) International application number: PCT/JP2021/040303
(87) International publication number: WO 2022/185613

(57) **Abstract**

A performance in a technique using a heater for manufacturing a resin molding product is further improved. A method of manufacturing a resin molding product includes: a step of placing a first portion configuring a resin molding product, in a first mold; a step of placing a second portion configuring a resin molding product, in a second mold; a step of inserting a heater between the first mold and the second mold; a step of partially heating the first portion and the second portion by the heater; a step of evacuating the heater; a step of welding the first portion and the second portion; and a step of extracting the resin molding product including the first portion and the second portion.

## Description

### TECHNICAL FIELD

The present invention relates to an apparatus of manufacturing a resin molding product, a method of manufacturing a resin molding product, and a mold.

### BACKGROUND ART

Japanese Patent Application Laid-open Publication No. 2018-008404 (Patent Document 1) describes a technique related to a die slide injection method (DSI method), which is a type of an injection molding method.

### RELATED ART DOCUMENT

### PATENT DOCUMENT

Patent Document 1: Japanese Patent Application Laid-open Publication No. 2018-008404

### SUMMARY OF THE INVENTION

### PROBLEMS TO BE SOLVED BY THE INVENTION

When a hollow molding product having a cavity therein is manufactured by an injection molding technique, instead of manufacturing of a unified hollow molding product, each of a plurality of partial molding products is manufactured by the injection molding technique, and then, the plurality of partial molding products are bonded to manufacture the hollow molding product in some cases.

In this technique, the injection molding technique is also used when, for example, the plurality of partial molding products are bonded. That is, instead of using an adhesive to bond the plurality of partial molding products, injected molten resin is poured into a joint region to bond the plurality of partial molding products.

However, the method of bonding the plurality of partial molding products by pouring the injected molten resin into the joint region is difficult in some cases to provide sufficient bonding strength due to a difference in constituent materials and crystallinity of the plurality of partial molding products, due to a small quantity of heat applied to the joint region, or the like.

Accordingly, for example, as a technique for bonding the plurality of partial molding products, instead of using the injected molten resin, a technique for bonding the plurality of partial molding products has been developed, the technique being made by inserting a heater between the plurality of partial molding products, melting the joint region of the plurality of partial molding products by heat generated from the heater, and then, applying pressure to the melted joint region.

In regard to this point, the technique using the heater for bonding the plurality of partial molding products is more superior in that the sufficient bonding strength can be provided, than the technique using the injected molten resin for bonding the plurality of partial molding products. However, even in the technique using the heater for manufacturing the molding product, it is still desirable to make contrivance to further improve performance.

### MEANS FOR SOLVING THE PROBLEMS

An apparatus of manufacturing a resin molding product according to an embodiment includes: a first mold mounting portion being capable of mounting a first mold thereon; a second mold mounting portion being capable of mounting a second mold having a notch portion thereon; and a heater being movable to be inserted in a cavity formed by the first mold and the second mold. Here, when the heater moves to outside of the cavity, the heater and the notch portion overlap in plan view.

The apparatus of manufacturing the resin molding product according to the embodiment includes a heater swinging portion configured to swing the heater.

The apparatus of manufacturing the resin molding product according to the embodiment includes a convection suppression member configured to suppress convection due to the heat generated from the heater inserted into the cavity.

The apparatus of manufacturing the resin molding product according to the embodiment includes a centering mechanism capable of being attached between the first mold and the second mold that face each other when the first mold is mounted on the first mold mounting portion and the second mold is mounted on the second mounting portion, the centering mechanism being capable of adjusting a position of placement of the heater inserted into the cavity to a center position between the first mold and the second mold.

The apparatus of manufacturing the resin molding product according to the embodiment includes a first monitor configured to be able to monitor a state of placement of a first portion and a second monitor configured to be able to monitor a state of placement of a second portion.

A method of manufacturing a resin molding product according to an embodiment includes: a step of placing a first portion configuring a resin molding product, in a first mold; and a step of placing a second portion configuring the resin molding product, in a second mold.

A mold according to an embodiment has a notch portion where a part of a heater can be placed.

The mold according to the embodiment includes a concave portion configured to allow a first portion configuring a resin molding product to be placed and a chuck configured to be capable of fixing the first portion placed in the concave portion.

The mold according to the embodiment includes a concave portion configured to allow a second portion configuring a resin molding product to be placed and a chuck configured to be capable of fixing the second portion placed in the concave portion.

### EFFECTS OF THE INVENTION

According to an embodiment, performance in a technique using a heater for manufacturing a resin molding product can be further improved.

### BRIEF DESCRIPTIONS OF THE DRAWINGS

FIG. 1 is a diagram for explaining a technique for manufacturing a unified molding product by bonding two partial molding products that are manufactured separately by an injection molding technique.
FIG. 2 is a diagram for explaining the technique for manufacturing the unified molding product by bonding the two partial molding products that are manufactured separately by the injection molding technique.
FIG. 3(a) to FIG. 3(c) are schematic diagrams each for explaining a "DSI method".
FIG. 4 is a diagram illustrating a configuration of a molding-product manufacturing system achieving a "HP-DSI method".
FIG. 5 is a diagram for explaining operation of the molding-product manufacturing system.
FIG. 6 is a diagram for explaining the operation of the molding-product manufacturing system.
FIG. 7 is a diagram schematically illustrating an "HP-IWM" system.
FIG. 8 is a flowchart for explaining an overview of operation of the "HP-IWM" system.
FIG. 9 is a diagram illustrating a configuration of an injection molding apparatus.
FIG. 10 is a diagram for explaining operation of the injection molding apparatus.
FIG. 11 is a diagram for explaining the operation of the injection molding apparatus.
FIG. 12 is a schematic diagram illustrating a configuration of a molding-product manufacturing apparatus.
FIG. 13 is a plan view illustrating movement of a heater, FIG. 13(a) is a diagram illustrating an insertion state of the heater, and FIG 13(b) is a diagram illustrating an evacuation state of the heater.
FIG. 14 is a flowchart for explaining operation of the molding-product manufacturing apparatus.
FIG. 15 is a flowchart for explaining the operation of the molding-product manufacturing apparatus.
FIG. 16 is a diagram for explaining the operation of the molding-product manufacturing apparatus.
FIG. 17 is a diagram for explaining the operation of the molding-product manufacturing apparatus, continued from FIG. 16.
FIG. 18 is a plan view schematically illustrating a state in which a partial molding product fitted in a mold is fixed by a plurality of chucks.
FIG. 19 is a diagram illustrating an example of a method of fixing a partial molding product by the chucks.
FIG. 20 is a diagram illustrating an example of the method of fixing the partial molding product by the chucks.
FIG. 21 is a diagram illustrating another example of the method of fixing the partial molding product by the chucks.
FIG. 22 is a diagram illustrating another example of the method of fixing the partial molding product by the chucks.
FIG. 23 is a diagram for explaining the operation of the molding-product manufacturing apparatus.
FIG. 24 is a diagram for explaining the operation of the molding-product manufacturing apparatus, continued from FIG. 23.
FIG. 25 is a diagram for explaining the operation of the molding-product manufacturing apparatus, continued from FIG. 24.
FIG. 26 is a diagram for explaining a welding step.
FIG. 27 is a diagram for explaining the operation of the molding-product manufacturing apparatus.
FIG. 28 is a diagram for explaining the operation of the molding-product manufacturing apparatus, continued from FIG. 27.
FIG. 29 is a diagram for explaining the operation of the molding-product manufacturing apparatus, continued from FIG. 28.
FIG. 30 is a diagram for explaining the operation of the molding-product manufacturing apparatus, continued from FIG. 29.
FIG. 31 is a flowchart for explaining the operation of the molding-product manufacturing apparatus.
FIG. 32 is a flowchart for explaining the operation of the molding-product manufacturing apparatus.
FIG. 33 is a diagram for explaining room for improvement.
FIG. 34 is a diagram for explaining a first contrivance point.
FIG. 35 is a diagram schematically illustrating a "horizontal configuration".
FIG. 36 is a diagram for explaining a first solution.
FIG. 37 is a diagram illustrating a specific configuration example 1.
FIG. 38 is a diagram illustrating a specific configuration example 2.
FIG. 39 is a diagram for explaining a configuration with a centering mechanism.
FIG. 40 is a diagram illustrating a fixing mechanism for fixing a heater including a contactless heater.
FIG. 41 is a diagram illustrating a configuration example adopting a centering mechanism which is a third contrivance point as the fixing mechanism for fixing the heater including the contactless heater.
FIG. 42 (a) and FIG. 42 (b) are diagrams each illustrating operation of the centering mechanism.
FIG. 43 is a diagram illustrating a centering mechanism of a rack-and-pinion type.
FIG. 44 is a diagram for explaining a centering mechanism of a link mechanism method.

### DETAILED DESCRIPTION OF PREFERRED EMBODIMENTS

The same components are denoted by the same reference signs throughout all the drawings for describing the embodiments, and the repetitive description thereof will be omitted. Note that hatching may be used even in a plan view so as to make the drawings easy to see.

### <Basic Manufacturing Technique of Hollow Molding Product>

A hollow molding product having a cavity therein is formed by using, for example, an injection molding technique. At this time, there are less cases of manufacturing a unified hollow molding product by the the injection molding technique, and most of the hollow molding products are often manufactured by combining a plurality of partial molding products manufactured by the injection molding technique.

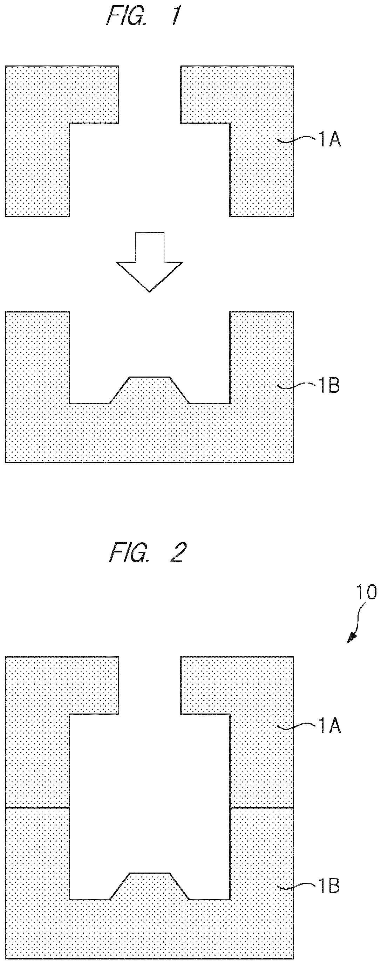

For example, as illustrated in FIG. 1 and FIG. 2, a partial molding product 1A and a partial molding product 1B having been separately manufactured by the injection molding technique are bonded to manufacture a unified molding product 10.

Here, the injection molding technique is also used when the plurality of partial molding products are bonded. That is, instead of using an adhesive to bond the plurality of partial molding products, injected molten resin is poured into a joint region to bond the plurality of partial molding products. As one of such molding techniques, there is a technique referred to as "Die Slide Injection method". The "Die Slide Injection method" is hereinafter referred to as a "DSI method", and the "DSI method" will be described.

### <Description of "DSI method">

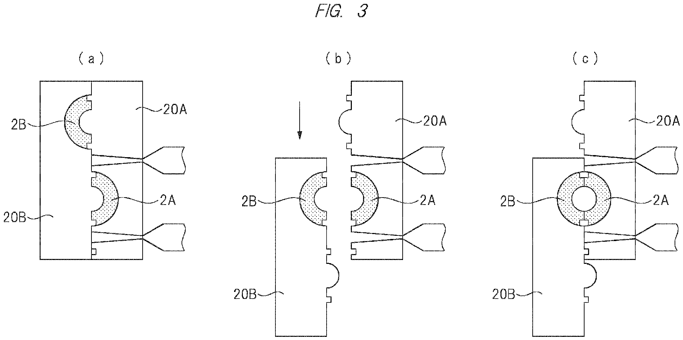

FIG. 3(a) to FIG. 3(c) are schematic diagrams for explaining the "DSI method".

In FIG. 3(a), first, a mold 20A having a first molding region used for forming a partial molding product 2A and a mold 20B having a second molding region used for forming a partial molding product 2B are prepared. Then, by pouring the molten resin into the mold 20A and the mold 20B which are in the "mold-closing" state, the partial molding product 2A is formed in the first molding region of the mold 20A, and the partial molding product 2B is formed in the second molding region of the mold 20B.

Next, as illustrated in FIG. 3(b), the partial molding product 2A and partial molding product 2B are placed at positions where they face each other, by sliding the mold 20B with respect to the mold 20A in the mold-opening state. Thereafter, as illustrated in FIG. 3(c), the molten resin is poured into the joint region between the partial molding product 2A and the partial molding product 2B in the "mold-closing" state of the mold 20A and the mold 20B. In this manner, the partial molding product 2A and the partial molding product 2B are bonded to each other by the molten resin to manufacture the unified molding product.

### <Room for Improvement in "DSI method">

Such an injection molding technique is the "DSI method", and there is room for improvement in this "DSI method" as described below. That is, the "DSI method" that bonds the partial molding product 2A and the partial molding product 2B by pouring the injected molten resin into the joint region may make it difficult to provide sufficient bonding strength due to a difference in constituent materials and crystallinity between the partial molding product 2A and the partial molding product 2B, a small quantity of heat applied to the joint region or others.

Accordingly, for example, as a technique for bonding two partial molding products, instead of using the injected molten resin as described in the "DSI method", a technique of bonding the two partial molding products has been developed, the technique being achieved by inserting a heater between the two partial molding products, melting the joint region between the two partial molding products themselves by heat generated from the heater, and then, applying pressure to the melted joint region. The technique improved from this "DSI method" is referred to as a "hot plate-die slide injection method" because of using the heater.

The "hot plate-die slide injection method" is hereinafter referred to as an "HP-DSI method", and the "HP-DSI method" will be described.

### <Description of "HP-DSI Method">

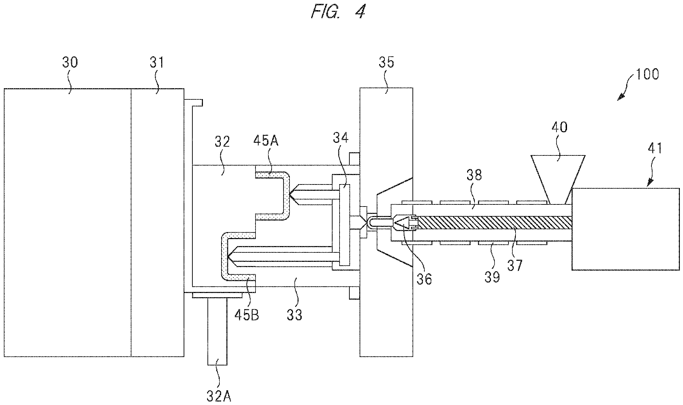

FIG. 4 is a diagram illustrating a configuration example of a molding-product manufacturing system achieving the "HP-DSI method".

In FIG. 4, the molding-product manufacturing system 100 has a mold-closing apparatus 30 attached to a movable platen 31 that can be moved. This mold-closing apparatus 30 is configured to be able to variably control a distance between the movable platen 31 and a fixed platen 35. And, a movable mold 32 and a fixed mold 33 can be placed between the movable platen 31 and the fixed platen 35. As a result, for example, when the distance between the movable platen 31 and the fixed platen 35 is variably controlled by the mold-closing apparatus 30, it is possible to shorten a distance between the movable mold 32 and the fixed mold 33 to provide the "mold-closing" state or lengthen the distance between the movable mold 32 and the fixed mold 33 to provide the "mold-opening" state.

At this time, when the state between the movable mold 32 and the fixed mold 33 is the "mold-closing" state, a sealed space is formed between the movable mold 32 and the fixed mold 33. Pouring the resin into this sealed space forms the partial molding product. In particular, in the molding-product manufacturing system 100 as illustrated in FIG. 4, when the state between the movable mold 32 and the fixed mold 33 is the "mold-closing" state, two sealed spaces are formed at positions different from each other. For example, pouring the resin into one sealed space forms a partial molding product 45A, and pouring the resin into the other sealed space forms a partial molding product 45B.

A slide mechanism 32A is attached to the movable mold 32. This slide mechanism 32A is configured to be able to slide a position of the movable mold 32 with respect to the fixed mold 33. In addition, a hot runner manifold (in-mold flow path) 34 is formed inside the fixed mold 33. By making flow of the resin through this hot runner manifold 34, the resin is injected into the two sealed spaces formed when the state between the movable mold 32 and the fixed mold 33 is the "mold-closing" state.

Next, as illustrated in FIG. 4, an injection apparatus 41 for extruding the resin is connected to the fixed platen 35. The resin extruded from the injection apparatus 41 is made to flow through the fixed platen 35 into the hot runner manifold 34 formed in the fixed mold 33.

This injection apparatus 41 has a hopper 40 for containing a resin raw material and a cylinder (barrel) 38. And, when the resin raw material is put into the hopper 40, this resin raw material is kneaded by a rotatable screw 37 placed inside the cylinder 38. At this time, a heater 39 is placed around the cylinder 38. The resin raw material put into the cylinder 38 is kneaded by the screw 37 while being heated by the heater 39 to become the molten resin. Note that a screw head backflow prevention ring 36 is provided inside the cylinder 38 to prevent backflow of the molten resin at the time of forward movement of the screw 37 (at the time of injection).

Subsequently, operation of manufacturing the molding product by using the molding-product manufacturing system 100 achieving the "HP-DSI method" will be briefly described.

First, in FIG. 4, the movable mold 32 and the fixed mold 33 are placed between the movable platen 31 and the fixed platen 35. Then, by moving the movable platen 31 be close to the fixed platen 35 by the mold-closing apparatus 30, the state between the movable mold 32 and the fixed platen 33 is made to be the "mold-closing" state. As illustrated in FIG. 4, this forms the two sealed spaces between the movable mold 32 and the fixed mold 33.

Next, the resin raw material is injected from the hopper 40 of the injection apparatus 41 into the cylinder 38, and the resin raw material is kneaded by the screw 37 placed inside the cylinder 38 while the injected resin raw material is being heated by the heater 39 placed around the cylinder 38. As a result, the resin raw material becomes the molten resin. This molten resin is extruded from the inside of the cylinder 38. The extruded molten resin is injected via the hot runner manifold 34 formed in the fixed mold 33 into each of the two sealed spaces formed between the movable mold 32 and the fixed mold 33. As a result, the molten resin solidifies in the one sealed space to form the partial molding product 45A, and the molten resin in the other sealed space solidifies to form the partial molding product 45B.

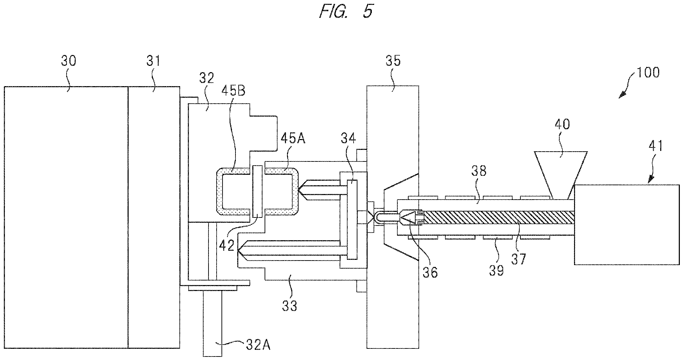

Subsequently, as illustrated in FIG. 5, by moving the movable platen 31 to be away from the fixed platen 35 by the mold-closing apparatus 30, the state between the movable mold 32 and the fixed mold 33 is made to be the "mold-opening" state. Then, the movable mold 32 is slid with respect to the fixed mold 33 by the slide mechanism 32A. In this manner, the partial molding product 45B is placed at a position facing the partial molding product 45A.

Thereafter, by a heater slide mechanism included in the molding-product manufacturing system 100, a heater 42 is inserted between the partial molding product 45A and the slid partial molding product 45B. That is, the heater 42 is inserted into a cavity formed between the fixed mold 33 and the slid movable mold 32. Then, by the heat supplied from the heated heater 42, a portion that becomes the joint region between the partial molding product 45A and the partial molding product 45B is heated and melted.

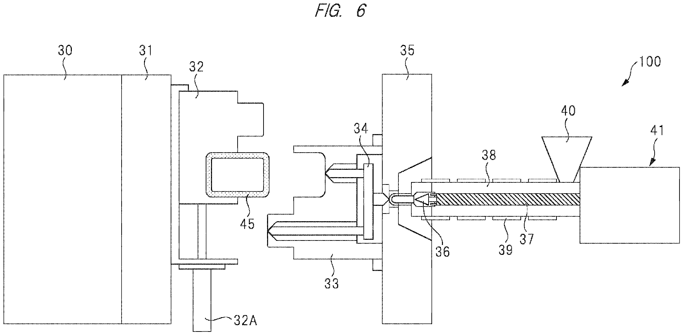

Next, after the heater 42 is slid from an insertion portion to an evacuation position by the heater slide mechanism, the movable platen 31 is moved to be close to the fixed platen 35 by the mold-closing apparatus 30, and therefore, the state between the movable mold 32 and the fixed mold 33 is made to be the "mold-closing" state. As a result, a pressure is applied to the portion that becomes the melted joint region between the partial molding product 45A and the partial molding product 45B to weld the partial molding product 45A and the partial molding product 45B. Then, as illustrated in FIG. 6, after the state between the movable mold 32 and the fixed mold 33 is made to be the "mold-opening" state by moving the movable platen 31 to be away from the fixed platen 35 by the mold-closing apparatus 30, a unified molding product 45 that is formed by welding the partial molding product 45A and the partial molding product 45B is taken out.

As described above, the "HP-DSI method" of manufacturing the unified molding product 45 is achieved by sliding the movable mold 32 with respect to the fixed mold 33 and then partially melting and bonding the partial molding product 45A and the partial molding product 45B by the heat supplied from the heater 42. Such an "HP-DSI method" is superior to the "DSI method" in that the sufficient bonding strength can be provided because the sufficient heat quantity can be supplied to, and the pressure can be applied to the joint region between the partial molding product 45A and the partial molding product 45B.

### <Room for Improvement in "HP-DSI Method">

As a result of further vigorous examination, the present inventors have newly found that there is also the room for improvement in the "HP-DSI method". Therefore, this room for improvement will be described below.

First, first room for improvement will be described. For example, in the "HP-DSI method", by the injection molding technique, the partial molding product 45A is formed in the one sealed space of the two sealed spaces formed between the movable mold 32 and the fixed mold 33, and the partial molding product 45B is formed in the other sealed space. Then, the unified molding product 45 is manufactured by sliding the partial molding product 45B without removing the partial molding product 45A formed in the one sealed space and the partial molding product 45B formed in the other sealed space, and then causing the heater 42 to melt and bond the joint region between the partial molding product 45A and the partial molding product 45B. That is, in the "HP-DSI method", from a first process to a last process, the partial molding product 45A and the partial molding product 45B are processed without being removed from between the movable mold 32 and the fixed mold 33.

Here, synthetic resin that configures the partial molding product 45A and the partial molding product 45B tends to shrink. For this reason, the "HP-DSI method" in which the partial molding product 45A and the partial molding product 45B are processed from the first process to the last process without being removed from between the movable mold 32 and the fixed mold 33 has a risk of the shrinkage of the synthetic resin in a middle of the processes to detach the partial molding product 45A and the partial molding product 45B. In this case, the unified molding product 50 cannot be manufactured. Accordingly, the first room for improvement in the "HP-DSI method" is that the partial molding product 45A and the partial molding product 45B are easily detached by the shrinkage of the resin.

Next, second room for improvement will be described. In the "HP-DSI method", for example, the unified molding product 45 is manufactured by combining the partial molding product 45A and the partial molding product 45B. When this unified molding product 45 has a large size, it also becomes necessary to increase a size of the molding-product manufacturing system 100 achieving the "HP-DSI method". In particular, in the "HP-DSI method", it is necessary to provide the slide mechanism 32A that slides the movable mold 32 with respect to the fixed mold 33. Therefore, the larger size of the unified molding product 45 makes it necessary to increase the size of the slide mechanism 32A, which means that this is directly connected to increase in the size of the molding-product manufacturing system 100. Furthermore, it is also necessary to increase sizes of the movable mold 32 itself and the fixed mold 33 itself. Therefore, the second room for improvement in the "HP-DSI method" is that due to the increase in the size of the unified molding product 45, it is also necessary to increase the sizes of not only the movable mold 32 itself and the fixed mold 33 itself but also the slide mechanism 32A, and, as a result, this easily leads to increase in the size of the molding-product manufacturing system 100 including these components.

Accordingly, in the present embodiment, a contrivance for overcoming the first room for improvement and the second room for improvement described above has been made. A technical idea with this contrivance will be described below.

The technical idea of the present embodiment is achieved by a technique called a "Hot Plate-Injection Welding Mold" method. The "hot plate-injection welding mold method" is hereinafter referred to as an "HP-IWM method", and this "HP-IWM method" will be described below.

### <Description of "HP-IWM" Method>

### <<Overview of "HP-IWM" System>>

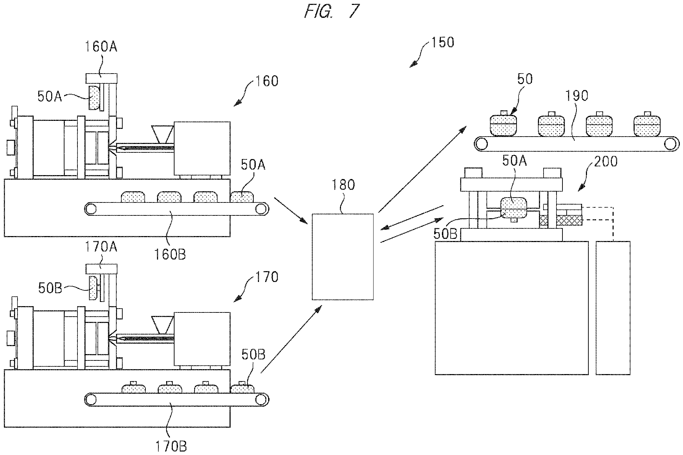

FIG. 7 is a diagram schematically illustrating the "HP-IWM" system.

In FIG. 7, the "HP-IWM" system 150 includes an injection molding apparatus 160, an injection molding apparatus 170, an extraction apparatus 160A, an extraction apparatus 170A, a conveyor 160B, a conveyor 170B, a robot arm 180, a molding-product manufacturing apparatus 200, and a conveyor 190.

The injection molding apparatus 160 is configured to manufacture a partial molding product 50A. The partial molding product 50A manufactured by the injection molding apparatus 160 is extracted from the injection molding apparatus 160 by the extraction apparatus 160A, and is transported by the conveyor 160B.

Similarly, the injection molding apparatus 170 is configured to manufacture a partial molding product 50B. The partial molding product 50B manufactured by the injection molding apparatus 170 is extracted from the injection molding apparatus 170 by the extraction apparatus 170A, and is transported by the conveyor 170B.

The robot arm 180 is configured to transport the partial molding product 50A transported by the conveyor 160B, to the molding-product manufacturing apparatus 200, and to transport the partial molding product 50B transported by the conveyor 170B, to the molding-product manufacturing apparatus 200.

The molding-product manufacturing apparatus 200 is configured to manufacture the unified molding product 50 by fitting the partial molding product 50A and the partial molding product 50B transported by the robot arm 180 into molds, respectively, and partially melting and bonding the partial molding product 50A and the partial molding product 50B by applying heat supplied from the heater to the partial molding product 50A and the partial molding product 50B fitted in the molds.

Then, the robot arm 180 further has a function to transport the unified molding product 50 manufactured by the molding-product manufacturing apparatus 200 from the molding-product manufacturing apparatus 200 to the conveyor 190.

Next, overview of operation of the "HP-IWM" system 150 will be described.

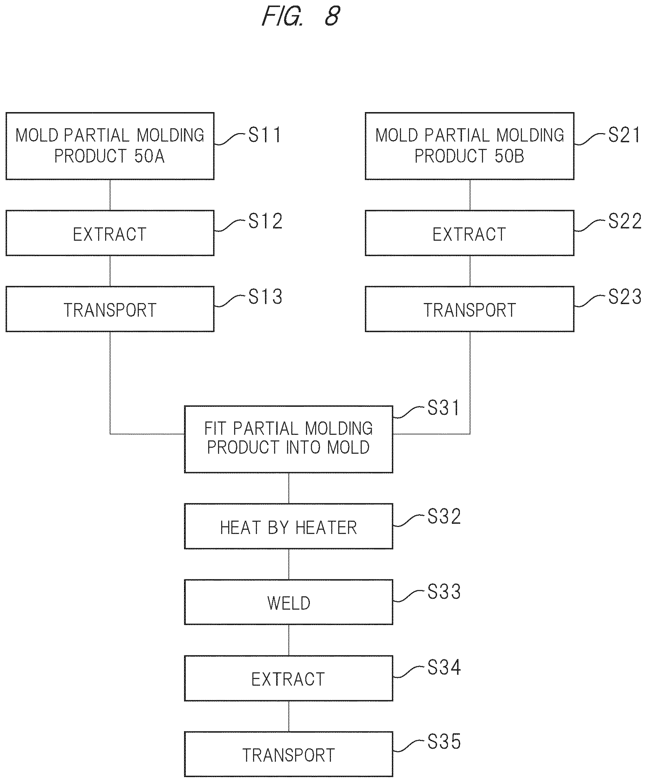

FIG. 8 is a flowchart for explaining the overview of the operation of the "HP-IWM" system.

In FIG. 8, in the injection molding apparatus 160, after the molding of the partial molding product 50A (S11), the molded partial molding product 50A is extracted from the injection molding apparatus 160 by the extraction apparatus 160A (S12). Then, the partial molding product 50A extracted by the extraction apparatus 160A is transported by the conveyor 160B (S13).

Similarly, in FIG. 8, in the injection molding apparatus 170, after the molding of the partial molding product 50B (S21), the molded partial molding product 50B is extracted from the injection molding apparatus 170 by the extraction apparatus 170A (S22). Then, the partial molding product 50B extracted by the extraction apparatus 170A is transported by the conveyor 170B

(S23) .

Subsequently, the partial molding product 50A transported by the conveyor 160B is delivered to the molding-product manufacturing apparatus 200 by the robot arm 180, and the partial molding product 50B transported by the conveyor 170B is also delivered to the molding-product manufacturing apparatus 200 by the robot arm 180. Thereafter, in the molding-product manufacturing apparatus 200, the partial molding product 50A and the partially molded 50B are fitted into the molds (S31). Then, in the molding-product manufacturing apparatus 200, a portion that becomes the joint region of each of the partial molding product 50A and partial molding product 50B fitted in the molds is heated by the heater (S32). As a result, the portion that becomes the joint region of each of the partial molding product 50A and partial molding product 50B is melted. Then, the molding-product manufacturing apparatus 200 manufactures the unified molding product 50 by welding the melted portions (S33) to bond the partial molding product 50A and partial molding product 50B.

After being extracted from the molding-product manufacturing apparatus 200 (S34), the unified molding product 50 manufactured by the molding-product manufacturing apparatus 200 is transported to the conveyor 190 by the robot arm 180.

Thus, according to the "HP-IWM" system 150, the unified molding product 50 can be manufactured.

### <<Details of "HP-IWM" System>>

### <<Configuration of Injection Molding Apparatus>>

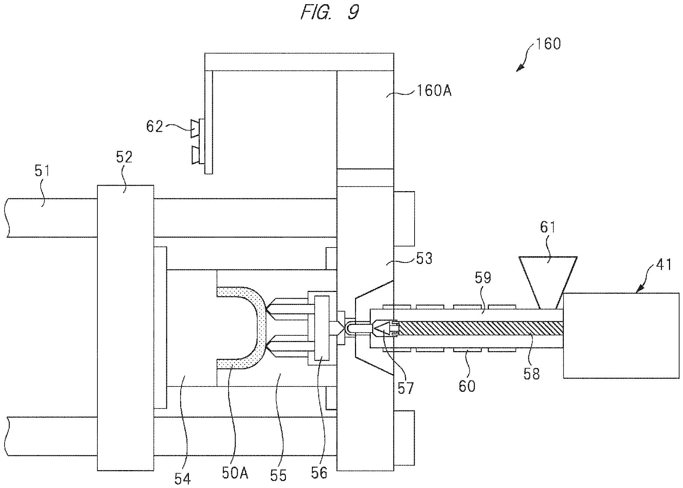

FIG. 9 is a diagram illustrating configurations of main parts of the injection molding apparatuses 160 and 170.

In FIG. 9, the injection molding apparatus 160 includes the movable platen 52 and the fixed platen 53 that are connected to a tie bar 51, and the movable platen 52 connected to the tie bar 51 is configured to be movable. A movable mold 54 and a fixed mold 55 can be placed between the movable platen 52 and the fixed platen 53. As a result, in the injection molding apparatus 160, by variably controlling the distance between the movable platen 52 and the fixed platen 53, it is possible to shorten a distance between the movable mold 54 and the fixed mold 55 to provide the "mold-closing" state, and to lengthen the distance between the movable mold 54 and the fixed mold 55 to provide the "mold-opening" state.

At this time, when the state between the movable mold 54 and the fixed mold 55 is made to be the "mold-closing" state, a sealed space is formed between the movable mold 54 and the fixed mold 55. Pouring the resin into this sealed space forms the partial molding product 50A. In particular, a hot runner manifold (in-mold flow path) 56 is formed inside the fixed mold 55. By making a flow of the resin through this hot runner manifold 56, the resin can be injected into the sealed space formed when the state between the movable mold 54 and the fixed mold 55 is made to be the "mold-closing" state.

Next, as illustrated in FIG. 9, the injection apparatus 41 is connected to the fixed mold 55. The injection apparatus 41 has functions to rotate and move a screw forward and backward, and can melt and plasticize, weigh, and inject the resin. The resin injected from the injection apparatus 41 is made to flow into the hot runner manifold 56 formed inside the fixed mold 55.

This injection apparatus 41 has a hopper 61 for containing a resin raw material and a cylinder (barrel) 59. And, when the resin raw material is put into the hopper 61, this resin raw material is kneaded by a rotatable screw 58 placed inside the cylinder 59. At this time, a heater 60 is placed around the cylinder 59. The resin raw material put into the cylinder 59 is kneaded by the screw 58 while being heated by the heater 60 to become the molten resin. Note that a screw head backflow prevention ring 57 is provided inside the cylinder 59 to prevent backflow of the molten resin at the time of forward movement of the screw 58 (at the time of injection).

Furthermore, as illustrated in FIG. 9, an extraction apparatus 160A for extracting the manufactured partial molding product 50A is attached to the injection molding apparatus 160, and a chuck 62 for sucking the partial molding product 50A is provided to this extraction apparatus 160A.

### <<<Operation of Injection Molding Apparatus>>>

Subsequently, operation of the injection molding apparatus 160 will be described.

First, in FIG. 9, the movable mold 54 and the fixed mold 55 are placed between the movable platen 52 and the fixed platen 53. Then, in the injection molding apparatus 160, the state between the movable mold 54 and fixed mold 55 is made to be the "mold-closing" state by moving the movable platen 52 to be close to the fixed platen 53. In this manner, as illustrated in FIG. 9, the sealed space is formed between the movable mold 54 and the fixed mold 55.

Next, the resin raw material is injected from the hopper 61 of the injection apparatus 41 into the cylinder 59, and the resin raw material is kneaded by the screw 58 placed inside the cylinder 59 while the injected resin raw material is being heated by the heater 60 placed around the cylinder 59. As a result, the resin raw material becomes the molten resin. This molten resin is weighed in the cylinder 59 by the backward movement of the screw, and is injected by the forward movement of the screw. The injected molten resin is injected via the hot runner manifold 56 formed in the fixed mold 55 into the sealed space formed between the movable mold 54 and the fixed mold 55. As a result, the molten resin solidifies in the sealed space to form the partial molding product 50A.

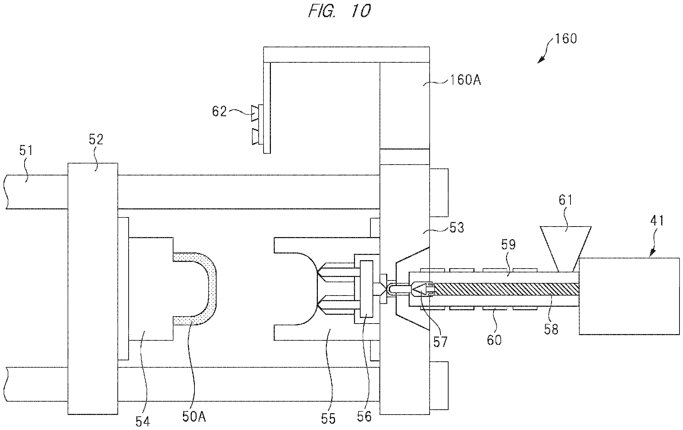

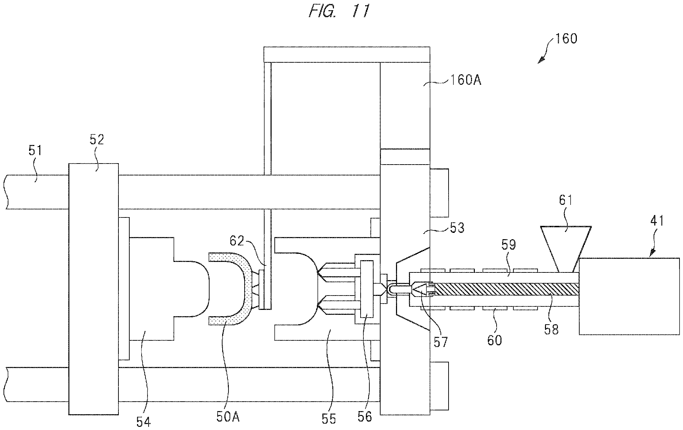

Subsequently, as illustrated in FIG. 10, in the injection molding apparatus 160, the state between the movable mold 54 and the fixed mold 55 is made to be the "mold-opening" state by moving the movable platen 52 to be away from the fixed platen 53. Then, as illustrated in FIG. 11, the partial molding product 50A is sucked by the chuck 62 provided in the extraction apparatus 160A. Then, the partial molding product 50A sucked by the chuck 62 is placed on and transported by, for example, the conveyor 160B illustrated in FIG. 7.

### <<Configuration of Apparatus of Manufacturing Molding Product>>

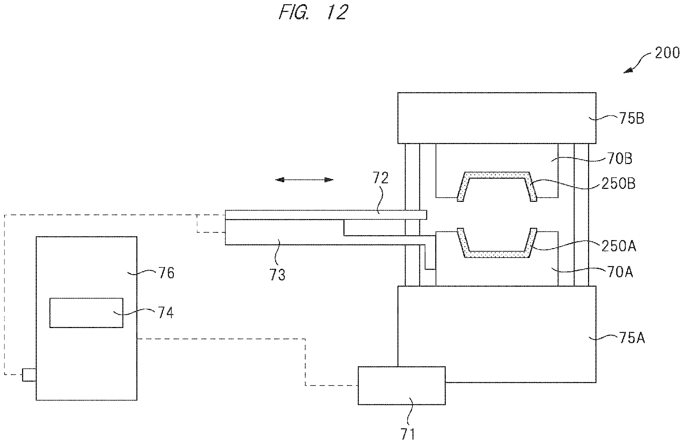

FIG. 12 is a schematic diagram illustrating an appearance configuration of the molding-product manufacturing apparatus 200.

In FIG. 12, the molding-product manufacturing apparatus 200 can be provided as a dedicated apparatus, and can also be provided by, for example, modifying a general-purpose press machine. Specifically, the molding-product manufacturing apparatus 200 can be achieved by mounting a mold, a heater, a heater slide mechanism, and a heater slide controller, onto the general-purpose press machine. This molding-product manufacturing apparatus 200 is configured to manufacture the unified molding product by partially melting and bonding two partial molding products by heat supplied from the heater, and has the following configuration.

The molding-product manufacturing apparatus 200 incudes a mold 70A, a mold 70B, a contact/contactless controller 71, a heater 72, a heater slide mechanism 73, and a heater slide controller 74.

The mold 70A is configured to, for example, fit a partial molding product 250A manufactured by one of the injection apparatuses therein, and is fixed to a stage. Therefore, the mold 70A can be said to be a fixed mold that is fixed to the stage. This stage functions as a mold mounting portion 75A for mounting the mold 70A. In particular, the mold 70A has a concave portion formed therein, and the partial molding product 250A is fitted into this concave portion.

The mold 70B is configured to, for example, fit a partial molding product 250B manufactured by the other of the injection apparatuses therein. And, the mold 70B is placed at a position facing the mold 70A and is movable so as to change a distance between the fixed mold 70A and the mold 70B. Therefore, the mold 70B can be said to be a movable mold that can be moved. This mold 70B is loaded on a mold mounting portion 75B. In particular, this mold 70B has a concave portion formed therein, and the partial molding product 250B is fitted into this concave portion.

The contact/contactless controller 71 is configured to control contact/contactless between the partial molding product 250A fitted in the mold 70A and the partial molding product 250B fitted in the mold 70B. Specifically, the contact/contactless controller 71 controls the contact/contactless state between the partial molding product 250A and the partial molding product 250B, by controlling the state between the mold 70A and the mold 70B to be the "mold-closing"/"mold-opening" state. For example, the contact/contactless controller 71 is configured to be able to control the state between the mold 70A and the mold 70B to be the "mold-closing"/"mold-opening" state by controlling the movement of the mold 70B. This contact/contactless controller 71 can be said to be a variable controller that variably controls a distance between the mold mounting portion 75A and the mold mounting portion 75B.

The heater 72 is configured to be able to be inserted between the partial molding product 250A fitted in the mold 70A and the partial molding product 250B fitted in the mold 70B, and is configured to be able to heat the portion that becomes the joint region between the partial molding product 250A and the partial molding product 250B while being inserted between the partial molding product 250A and the partial molding product 250B.

In other words, the heater 72 is configured to be movable to be inserted in a cavity formed between the mold 70A in which the partial molding product 250A is placed and the mold 70B in which the partial molding product 250B is placed, and is configured to be able to heat the portion that becomes the joint region between the partial molding product 250A and the partial molding product 250B while being inserted in the cavity.

The heater slide mechanism 73 is fixed to any of the mold 70A, the mold 70B, the mold mounting portion 75A and the mold mounting portion 75B, and is configured to slide the heater 72 in order to insert the heater 72 between the partial molding product 250A and the partial molding product 250B or to evacuate the heater 72 from between the partial molding product 250A and the partial molding product 250B. That is, the heater slide mechanism 73 is configured to allow the heater 72 to slide between the insertion position and the evacuation position. The heater slide mechanism 73 is controlled by the heater slide controller 74.

In FIG. 12, the mold 70A is placed on a stage 75A, and the partial molding product (first workpiece) 250A is fitted in this mold 70A. In contrast, the mold 70B is placed at a position facing the mold 70A, and the partial molding product (second workpiece) 250B is fitted in this mold 70B. And, the contact/contactless controller 71 is configured to control the movement of the mold 70B by using movement of a stage 75B. That is, the contact/contactless controller 71 is configured to control the distance or the contact/contactless state between the partial molding product 250A fitted in the mold 70A and the partial molding product 250B fitted in the mold 70B, by controlling the movement of the mold 70B. In other words, the contact/contactless controller 71 has a function to control the distance or the state between the mold 70A and the mold 70B to be the "mold-closing"/"mold-opening" state.

Next, the molding-product manufacturing apparatus 200 includes the heater 72. This heater 72 is connected to the heater slide mechanism 73, and can be slid by the heater slide mechanism 73 in an arrow direction (horizontal direction) of FIG. 12. Specifically, the heater slide controller 74 is configured to control temperatures or outputs of the heater slide mechanism 73 and the heater. By the heater slide controller 74 controlling the heater slide mechanism 73, the heater 72 is inserted between the partial molding product 250A and the partial molding product 250B or is evacuated from between the partial molding product 250A and the partial molding product 250B.

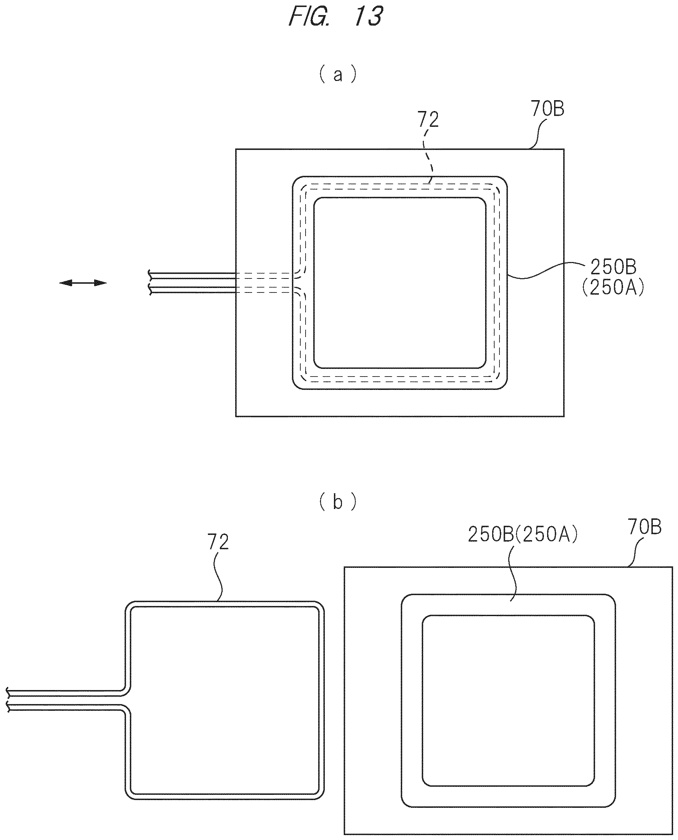

For example, each of FIG. 13(a) and FIG. 13(b) is a diagram viewed from above FIG. 12, and is a plan view schematically illustrating movement of the heater 72. The heater 72 is configured to be slidable between the insertion portion (FIG. 13(a)) that planarly overlaps the mold 70B and the evacuation position (FIG. 13(b)) that does not planarly overlap the mold 70B. Here, as illustrated in FIG. 13 (a), if the heater 72 is placed at the insertion portion that planarly overlaps the mold 70B, a heating position by the heater 72 overlaps a welding region of the partial molding product 250B and the partial molding product 250A. This allows the heater 72 to heat the portion that becomes the joint region between the partial molding product 250A and the partial molding product 250B. The molding-product manufacturing apparatus 200 is configured as described above.

### <<Heater Type>>

Here, the heater 72 used in the "HP-IWM method" may be made of a contactless heater or a contact heater. Examples of the contactless heater may include a carbon heater or a halogen heater. However, a type of the contactless heater is not limited if it can irradiate a partial molding product with infrared rays, near-infrared rays, or the like to heat the partial molding product without contact. On the other hand, as the contact heater, a heating plate can be exemplified. Any type of the heating plate is applicable if the heating plate is a member capable of, for example, heating the welded portion, such as a member made of a plate made of metal such as iron, aluminum, brass, or copper heated by a cartridge heater, a ceramic heater in which a heating element is sandwiched between ceramics such as alumina or silicon nitride to be insulated, a film-like heater in which a heating element is sandwiched by heat-resistant films to be insulated or others.

An advantage of using the contactless heater is that heating in a clean state is possible because the heater does not come into contact with the partial molding product. On the other hand, it is difficult to adjust a temperature. In regard to this point, the contact heater has an advantage of easier temperature adjustment than the contactless heater.

Both of the contactless heater and the contact heater may have a shape that makes it possible to heat an entire projection plane of the partial molding product or may have a shape that makes it possible to selectively heat only the welded portion of the partial molding product. On the other hand, if there is a portion in the welded portion that cannot be heated by the heater, resin in the non-heated portion does not melt, and that portion is not joined. Moreover, if there is a portion in the welded portion that is selectively intensively heated by the heater, the resin in that portion decomposes, and its strength decreases. Therefore, the heater is required to have a function to adjust its shape and output characteristics, or the like, to uniformly heat the welded portion.

Although detailed operation of the molding-product manufacturing apparatus 200 will be described below, the operation differs depending on whether the heater 72 is the contactless heater or the contact heater. For this reason, the operation in the case of the heater 72 made of the contactless heater will be described first, and then, the operation in the case of the heater 72 made of the contact heater will be described.

### <<Operation of Molding-Product Manufacturing Apparatus (Case of Contactless Heater)>>

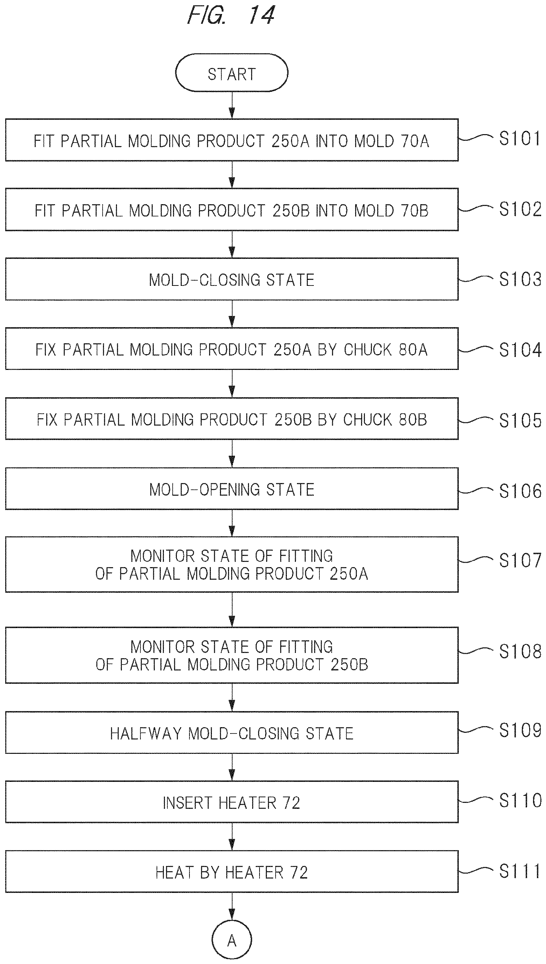

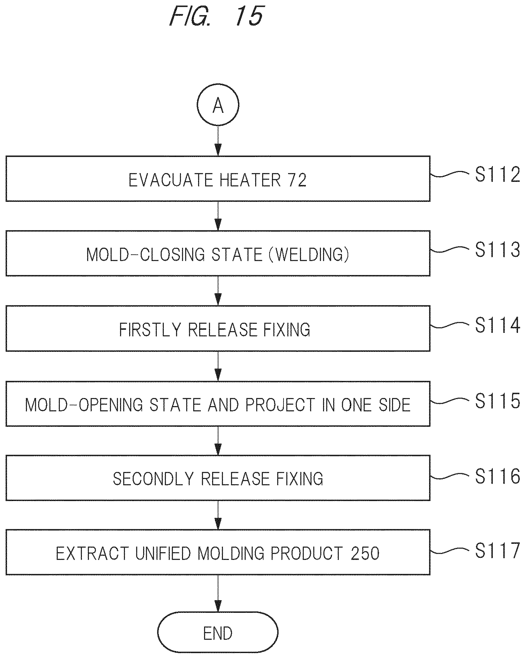

FIG. 14 and FIG. 15 are flowcharts each for explaining the operation of the molding-product manufacturing apparatus.

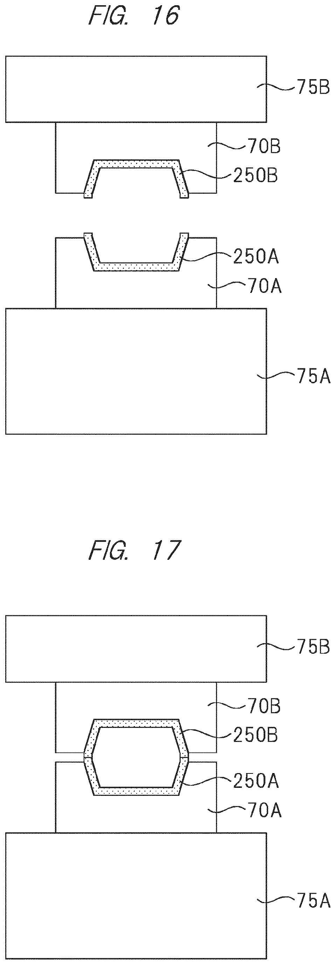

First, as illustrated in FIG. 16, the partial molding product 250A is fitted in the mold 70A (S101 of FIG. 14), and the partial molding product 250B is fitted in the mold 70B (S102 of FIG. 14). Thereafter, as illustrated in FIG. 17, the mold 70B is moved downward by the control of the contact/contactless controller 71 to provide the "mold-closing" state (S103 of FIG. 14) in which the mold 70A and the mold 70B are brought to a position where the joint portions of the partial molding product 250A and the partial molding product 250B are adhered.

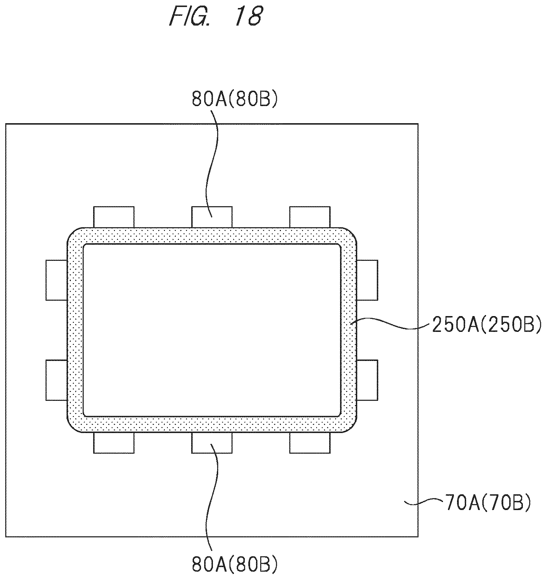

Next, the partial molding products 250A and 250B are fixed by the chuck. Specifically, FIG. 18 is a plan view schematically illustrating a state in which the partial molding product fitted in the mold is fixed by a plurality of chucks. In FIG. 18, the partial molding product 250A fitted in the mold 70A is fixed by a plurality of chucks 80A (S104 of FIG. 14). Similarly, the partial molding product 250B fitted in the mold 70B is fixed by a plurality of chucks 80B (S105 of FIG. 14). For example, the mold 70A has the plurality of chucks 80A fixing the partial molding product 250A. Similarly, the mold 70B has the plurality of chucks 80B fixing the partial molding product 250B. The number of chucks can be determined appropriately by a size of the molding product. In addition, the fixing of the partial molding product 250A (S104) and the fixing of the partial molding product 250B (S105) may be performed simultaneously.

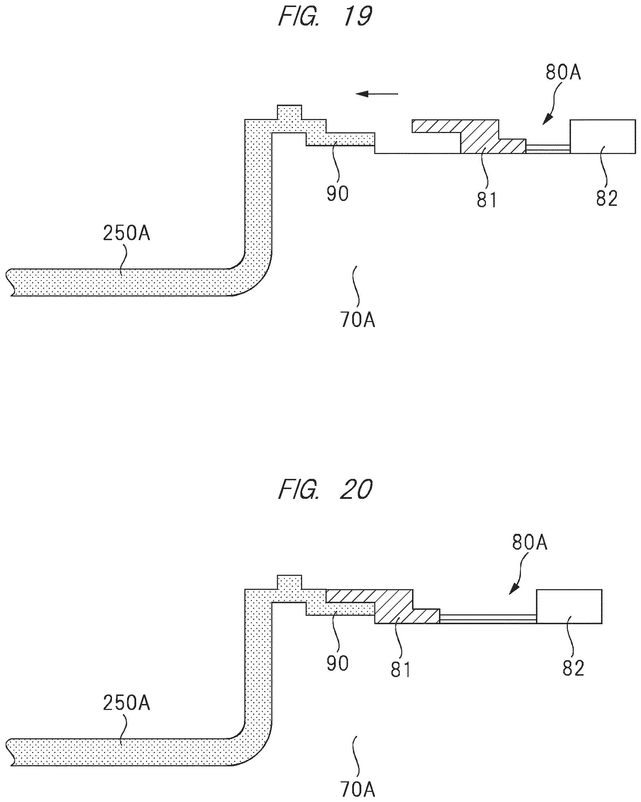

For example, FIG. 19 and FIG. 20 are diagrams each illustrating an example of a method of fixing the partial molding product by the chuck. As illustrated in FIG. 19, a flange 90 is provided at a tip of the partial molding product 250A fitted in the mold 70A. And, the chuck 80A is made of a partial core 81 and an air cylinder 82. In this case, as illustrated in FIG. 19 and FIG. 20, when the partial core 81 is fitted into the flange 90 by extrusion force based on the air cylinder 82, the partial molding product 250A can be fixed by the chuck 80A.

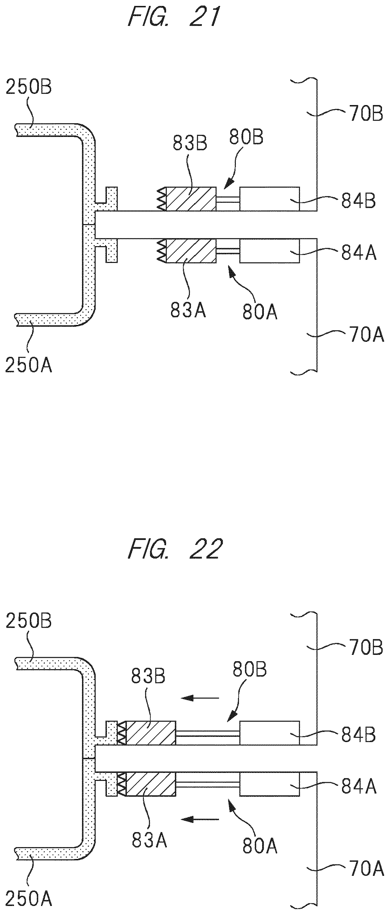

In addition, FIG. 21 and FIG. 22 are diagrams each illustrating another example of the method of fixing the partial molding product 250A by the chuck 80A and the method of fixing the partial molding product 250B by the chuck 80B. As illustrated in FIG. 21, the chuck 80A has a partial core 83A and an air cylinder 84A, and the partial core 83A and the air cylinder 84A are connected. Similarly, the chuck 80B has a partial core 83B and an air cylinder 84B, and the partial core 83B and the air cylinder 84B are connected. And, a tip of the partial core 83A and a tip of the partial core 83B have a "saw blade shape" that is easy to be pressed and easy to cause detachment. At this time, as illustrated in FIG. 21 and FIG. 22, when the partial core 83A is pressed against an end of the partial molding product 250A by the extrusion force based on the air cylinder 84A, the partial molding product 250A can be fixed by the chuck 80A. Similarly, when the partial core 83B is pressed against an end of the partial molding product 250B by the extrusion force based on the air cylinder 84B, the partial molding product 250B can be fixed by the chuck 80B.

At this time, when an entry/exist state of the air cylinder is checked by using a limit switch, it is possible to monitor a chuck state for the partial molding product 250A and the partial molding product 250B. As a chuck mechanism, either one type of FIG. 19 or FIG. 21 may applicable, or combination of a plurality of types may be applicable. In addition, another mechanism may also applicable as far as the mechanism can chuck the partial molding product. For example, the air cylinder 84A or 84B may be an oil hydraulic cylinder. In addition, the partial cores 83A and 83B may be pressed against the ends of the partial molding products 250a and 250B by elastic force based on a spring. Alternatively, the partial cores 83A and 83B may be moved by a motor.

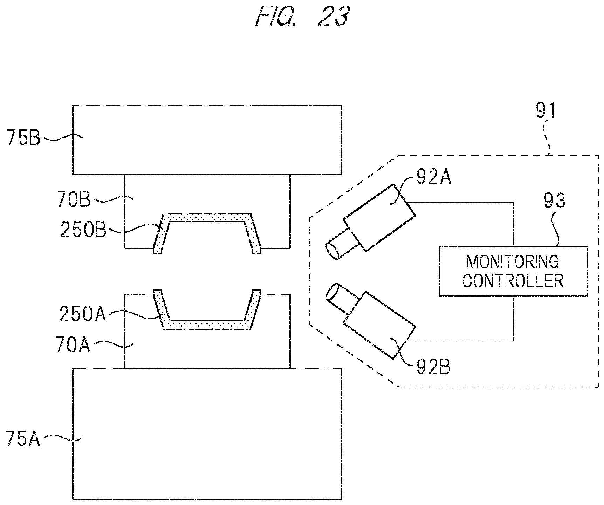

Subsequently, the mold 70B is moved upward by the control of the contact/contactless controller 71 to provide the "mold-opening" state as the state between the mold 70A and the mold 70B (S106 of FIG. 14). Thereafter, as illustrated in FIG. 23, the fitting state of the partial molding product 250A fitted in the mold 70A is monitored by a monitor 91 (S107 of FIG. 14), and the fitting state of the partial molding product 250B fitted in the mold 70B is monitored by the monitor 91 (S108 of FIG. 14).

Specifically, the monitor 91 has an imager 92A, an imager 92B, and a monitoring controller 93. The imager 92A is configured to capture an image of the fitting state of the partial molding product 250A, and the imager 92B is configured to capture an image of the fitting state of the partial molding product 250B. And, the monitoring controller 93 is configured to monitor whether or not the fitting state of the partial molding product 250A is good, based on the image captured by the imager 92A, and is configured to monitor whether or not the fitting state of the partial molding product 250B is good, based on the image captured by the imager 92B. As the imager 92A and the imager 92B, a commercially-available camera for monitoring the mold state can be used. In addition, the states of the partial molding products 250A and 250B may be monitored by either one of the imagers 92A and 92B, or the states of the partial molding product 250A and the partial molding product 250B may be individually monitored by a plurality of the imagers.

As a result, if the monitor 91 determines that the fitting state of the partial molding product 250A and the fitting state of the partial molding product 250B are good, the operation of the molding-product manufacturing apparatus 200 is continued. In contrast, if the monitor 91 determines that at least either one of the fitting state of the partial molding product 250A or the fitting state of the partial molding product 250B is not good, it is possible to take a measure to stop the operation of the molding-product manufacturing apparatus 200. Consequently, it can be expected that production of defective items or damage on the molds can be prevented.

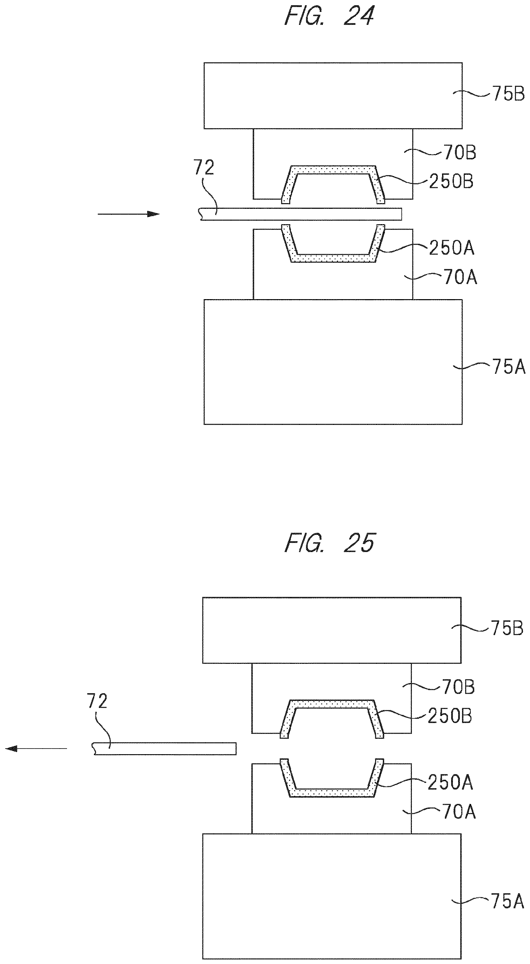

Next, as illustrated in FIG. 24, the mold 70B is slightly moved downward by the control of the contact/contactless controller 71 to provide a halfway "mold-closing" state as the state between the mold 70A and the mold 70B (S109 of FIG. 14). Then, the heater slide mechanism 73 is controlled by the heater slide controller 74 to slide the heater 72 and insert the heater 72 to the gap between the partial molding product 250A and the partial molding product 250B (S110 of FIG. 14).

Then, the heater 72 is heated (Sill of FIG. 14). As a result, the heat supplied from the heater 72 melts the portion that becomes the joint region between the partial molding product 250A and the partial molding product 250B. Thereafter, as illustrated in FIG. 25, the heater slide mechanism 73 is controlled by the heater slide controller 74 to slide the heater 72 and evacuate the heater 72 from between the partial molding product 250A and the partial molding product 250B (S112 of FIG. 15) .

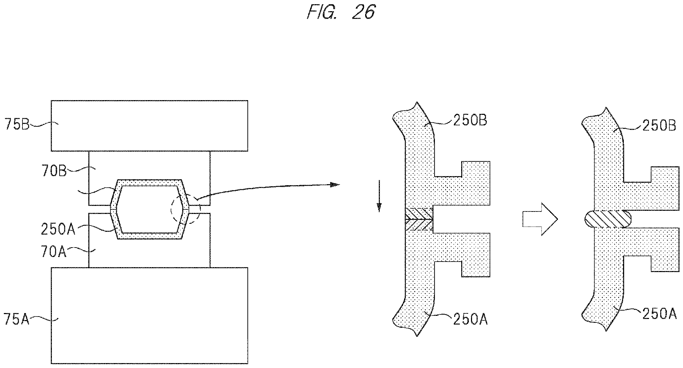

Subsequently, the mold 70B is moved downward by the control of the contact/contactless controller 71 to provide the "mold-closing" state as the complete state between the mold 70A and the mold 70B (S113 of FIG. 15). At this time, as illustrated in FIG. 26, for example, the pressing at a predetermined pressure or the pusing at a predetermined amount is performed for a predetermined period of time measured by a timer. In this manner, the molten resin is flown out to weld the joint portion between the partial molding product 250A and the partial molding product 250B. As a result, the partial molding product 250A and the partial molding product 250B are unified to be the unified molding product 50.

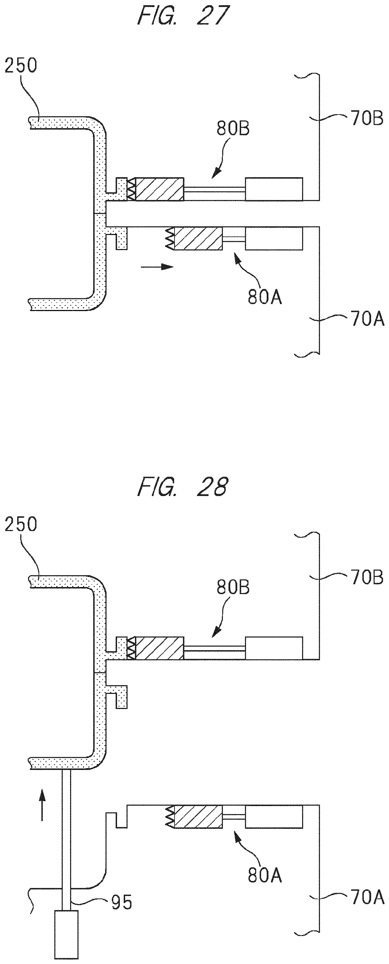

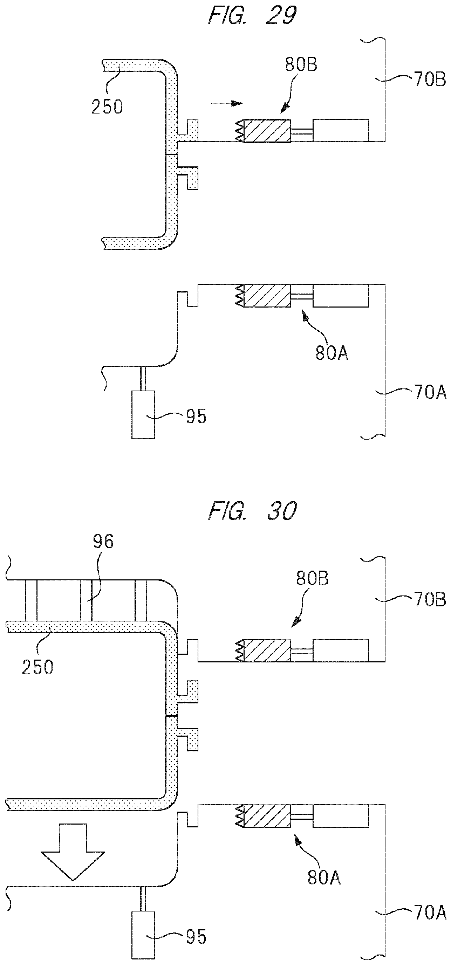

Next, as illustrated in FIG. 27, the fixing of the unified molding product 50 by the chuck 80A is released (S114 of FIG. 15). Then, as illustrated in FIG. 28, the mold 70B is moved upward by the control of the contact/contactless controller 71 to provide the "mold-opening" state as the state between the mold 70A and the mold 70B and cause an oil-hydraulically projecting pin 95 to push up the unified molding product 250 (S115 of FIG. 15). Thereafter, as illustrated in FIG. 29, the fixing of the unified molding product 50 by the chuck 80B is released (S116 of FIG. 15). Subsequently, as illustrated in FIG. 30, by projecting an ejector pin 96, the unified molding product 250 is finally extracted (S117 of FIG. 15).

Note that an order of removing the chucks 80A and 80B is not limited to this. In this example, although the fixing by the chuck 80A is first released, the fixing by the chuck 80B may be released first by switching side A and side B.

As described above, the unified molding product 250 can be manufactured by the operation of the molding-product manufacturing apparatus 200 according to the present embodiment.

### <<Operation of Molding-Product Manufacturing Apparatus (Case of Contact Heater)>>

Subsequently, the operation in the case of the heater 72 made of the contact heater will be described. Particularly, an example of the heater 72 made of the heating plate will be exemplified and described.

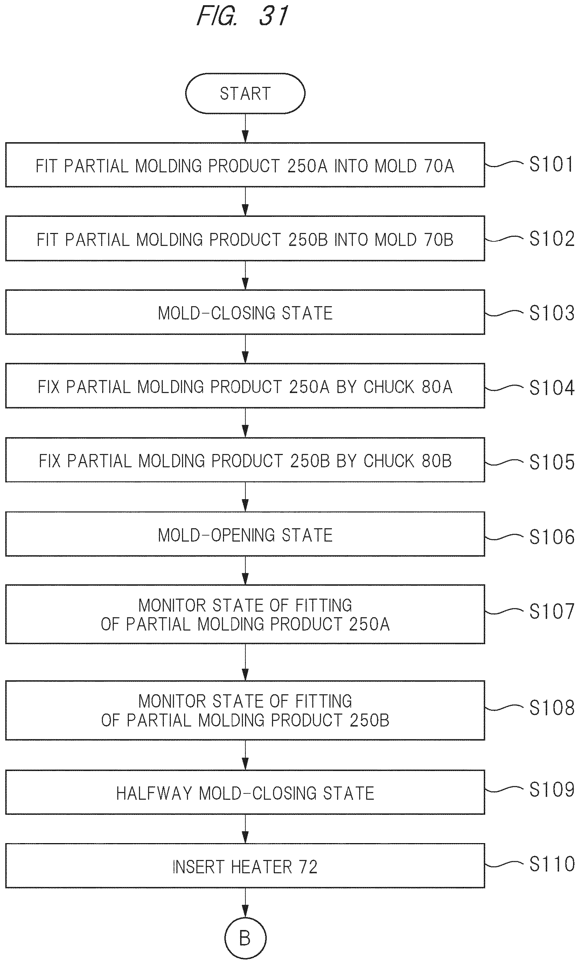

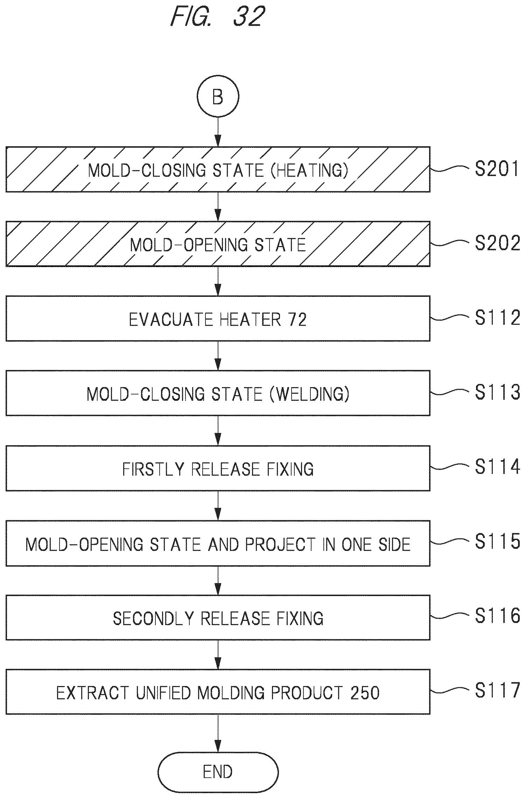

FIG. 31 and FIG. 32 are flowcharts each explaining the operation of the molding-product manufacturing apparatus.

The flowcharts illustrated in FIG. 31 and FIG. 32 are substantially similar to the flowcharts illustrated in FIG. 14 and FIG. 15, and thus, different points will be mainly described.

First, step S101 to step S110 are similar. By these steps, the heater 72 is inserted between the partial molding product 250A and the partial molding product 250B (S110 of FIG. 31). At this time, there is a gap between the heater 72 and the partial molding product 250A/partial molding product 250B. In other words, the heater 72 is in a contactless state with the partial molding product 250A and the partial molding product 250B.

Next, the mold 70B is moved downward by the control of the contact/contactless portion 71 to provide the "mold-closing" state as the state between the mold 70A and the mold 70B. As a result, the heater 72 is brought into contact with and sandwiched between the partial molding product 250A and the partial molding product 250B. The "mold-closing" state at this time is adjusted to reduce the pressing force to prevent the heater 72 from being damaged.

Then, the heater 72 is heated while being in contact with the partial molding product 250A and the partial molding product 250B. In this manner, the portion that becomes the joint region between the partial molding product 250A and the partial molding product 250B is melted (S201 of FIG. 32).

Thereafter, the mold 70B is moved upward by the control of the contact/contactless controller 71 to provide the "mold-opening" state as the state between the mold 70A and the mold 70B (S202 of FIG. 3). Subsequently, the heater slide mechanism 73 is controlled by the heater slide controller 74 to slide the heater 72 and evacuate the heater 72 from between the partial molding product 250A and the partial molding product 250B (S112 of FIG. 32).

Subsequent processes are similar. As described above, the unified molding product 250 can be manufactured by the operation of the molding-product manufacturing apparatus 200 according to the present embodiment.

### <Features of Embodiment>

Next, feature points of the present embodiment will be described.

A first feature point of the present embodiment is that there is a step of fitting the partial molding product to the mold in the technique of manufacturing the unified molding product by using the heat supplied from the heater to partially melt and bond two partial molding products. Consequently, even if the resin that configures the partial molding product shrinks, it is possible to prevent the detachment of the partial molding product from the mold.

For example, in the "HP-DSI method", the partial molding product is processed without being removed from the mold during the first step to the last step. However, the synthetic resin that configures the partial molding product has the property of shrinking. For this reason, if the partial molding product is processed without being removed from the mold during the first step to the last step, the synthetic resin may shrink in the middle of the steps, and the partial molding product may be detached from the mold.

In regard to this point, In the present embodiment, the partial molding product manufactured by another apparatus is fitted in the mold. In this case, the mold can be designed in consideration of the shrinkage of the resin that configures the partial molding product, and therefore, the possibility of the detachment of the partial molding product from the mold can be reduced. As a result, according to the present embodiment, it is possible to improve a manufacturing yield of the unified molding products.

The present embodiment adopts a further contrivance for suppressing the detachment of the partial molding product from the mold due to the shrinkage of the synthetic resin that configures the partial molding product.

A second feature point of the present embodiment is that, for example, the chuck for fixing the partial molding product fitted in the mold is provided as illustrated in FIG. 18 to FIG. 22. As a result, according to the present embodiment, even if the partial molding product is almost detached from the mold, it is possible to effectively prevent the detachment of the partial molding product from the mold because the partial molding product is fixed by the chuck. As a result, according to the second feature point of the present embodiment, since the possibility of the detachment of the partial molding product from the mold can be reduced, it is possible to further improve the manufacturing yield of the unified molding products.

Next, a third feature point of the present embodiment is that, for example, the monitor configured to monitor the fitting state of the partial molding product is provided as illustrated in FIG. 23. Because of this configuration, the detachment of the partial molding product from the mold can be detected by the monitor even if happed. And, if the monitor detects anomaly such as a lift of the partial molding product, it is also possible to stop the manufacturing line. Therefore, according to the third feature point of the present embodiment, the production of defective items can be prevented before happening, and therefore, it is possible to further improve the manufacturing yield of the unified molding products even in terms of this point.

### <Importance of Heater>

The technical idea of the present embodiment is a technical idea of manufacturing the unified molding product by melting and bonding the portion that becomes the joint region of each of the plurality of partial molding products by using heat supplied from the heater. And, in the molding-product manufacturing apparatus that embodies this technical idea, the heater plays an important role to improve performance of the molding-product manufacturing apparatus.

Accordingly, in the present embodiment, attention has been paid to the heater, and the performance of the molding-product manufacturing apparatus has been improved by various contrivance points related to the heater.

The various contrivance points related to the heater will be described below. The technical idea of the present embodiment described above is mainly an idea related to the "HP-IWM method". However, the contrivance points related to the heater described below are widely applicable to methods using the heater for manufacturing the molding product. For this reason, the various contrivance points related to the heater are widely applicable to not only the molding-product manufacturing apparatus achieving the "HP-IWM method" but also the molding-product manufacturing apparatus achieving the "HP-DSI method". However, the following description will be made particularly in assumption of the molding-product manufacturing apparatus achieving the "HP-IWM method".

### <First Contrivance Point>

### <<Room for Improvement>>

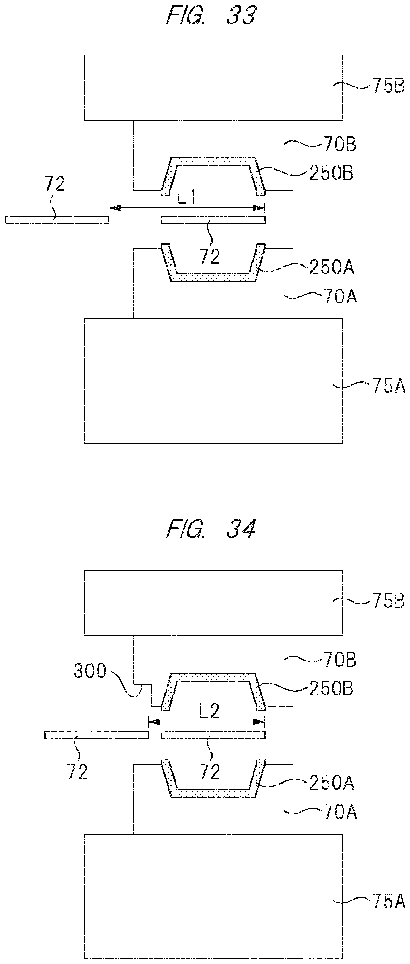

FIG. 33 is a diagram for explaining room for improvement.

In FIG. 33, the portion that becomes the joint region between the partial molding product 250A fitted in the mold 70A and the partial molding product 250B fitted in the mold 70B is melted by being heated by the heater 72 inserted between the mold 70A and the mold 70B. Thereafter, the heater 72 becomes an obstacle for the welding of the melted portion, and therefore, for example, the heater 72 is evacuated to outside of the mold 70A and the mold 70B as illustrated in FIG. 33.

At this time, in order to reliably evacuate the heater 72 to a position where the heater does not come into contact with the mold 70A and the mold 70B, it is necessary to make a stroke L1 illustrated in FIG. 33 longer. However, if the stroke L1 is long, a total length of the apparatus is long, and this leads to increase in a size of the molding-product manufacturing apparatus. Moreover, the long stroke L1 means long cycle time for sliding the heater 72 between the insertion portion and the evacuation position, and this leads to decrease in throughput. Furthermore, a sliding distance of the heater 72 becomes long, and misalignment (deflection) of the support portion supporting the heater 72 becomes large. This means that uniform heating at the joint region by the heater 72 becomes difficult. For these reasons, it is desirable that the stroke for sliding the heater 72 be as short as possible.

### <Solution>

Accordingly, the present embodiment adopts contrivance points for shortening the stroke for sliding the heater 72 as much as possible. This contrivance points will be described below.

FIG. 34 is a diagram for explaining a first contrivance point.

In FIG. 34, the mold 70B is provided with, for example, a notch portion 300. This notch portion 300 functions as a standby place (evacuation place) for the heater 72. That is, when the heater 72 moves to the standby place outside of the cavity formed by the mold 70A and the mold 70B, the heater 72 and the notch portion 300 overlap in plan view. In this manner, the first contrivance point is to provide the mold 70B with the notch portion 300 to be the evacuation place of the heater 72. However, the notch portion 300 may be provided to not the mold 70B but the mold 70A, or may be provided to both the mold 70B and the mold 70A.

Since the notch portion 300 is provided as illustrated in FIG. 34, a stroke L2 for sliding the heater 72 is made shorter than the stroke L1 illustrated in FIG. 33 showing the case without the notch portion 300. Thus, according to the first contrivance point, the stroke L2 is shortened, and as a result, the total length of the apparatus can be shortened, and therefore, the increase in the size of the molding-product manufacturing apparatus can be suppressed.

In addition, the insertion portion and the evacuation position of the heater 72 become closer to each other, and as a result, the cycle time for sliding the heater 72 to reciprocate can be reduced. This means that the throughput is improved. Furthermore, the shorter time for sliding the heater 72 from the insertion position to the evacuation position means that time taken from the evacuation of the heater 72 to the welding of the melted region is short. And, the short time taken until the welding of the melted region means that it is possible to suppress a temperature drop at the melted region. As a result, the melted region can be welded while high temperature is maintained. Therefore, according to the first contrivance point, it is possible to improve the bonding reliability of the melted region.

Furthermore, since the length of the support portion (for example, a support arm) supporting the heater 72 can be shortened, the misalignment (deflection) of the support portion can be suppressed. As a result, according to the first contrivance point, it is possible to achieve the uniform heating at the portion that becomes the joint region.

As described above, according to the first contrivance point of providing the notch portion 300 in the mold 70B, the time for sliding the heater 72 can be reduced. As a result, according to the first contrivance point, it is possible to achieve, by a simple configuration, the remarkable effects such as (1) the suppression of the increase in the size of the molding-product manufacturing apparatus, (2) the improvement of the manufacturing efficiency of the unified molding product through the improved throughput, and (3) the improvement of the bonding reliability of the bonding region because of the suppression of the temperature drop at the melted region and the achievement of the uniform heating, the remarkable effects being difficult to be achieved by the prior-art technique. In this manner, it can be said that the first contrivance point has an exceptional technical significance in that a large effect can be achieved without increasing a cost.

### <Second Contrivance Point>

### <<Room for Improvement>

In the above description, the configuration (referred to as "vertical configuration") in which the mold 70A and the mold 70B are placed to face each other in a vertical direction is mainly assumed. However, for example, a configuration (referred to as a "horizontal configuration") in which the mold 70A and the mold 70B are placed to face each other in a horizontal direction is also considerable.

In particular, the second contrivance point is a contrivance point for the room of improvement appearing in the "horizontal configuration". First, the room for improvement particularly appearing in the "horizontal configuration" will be described below.

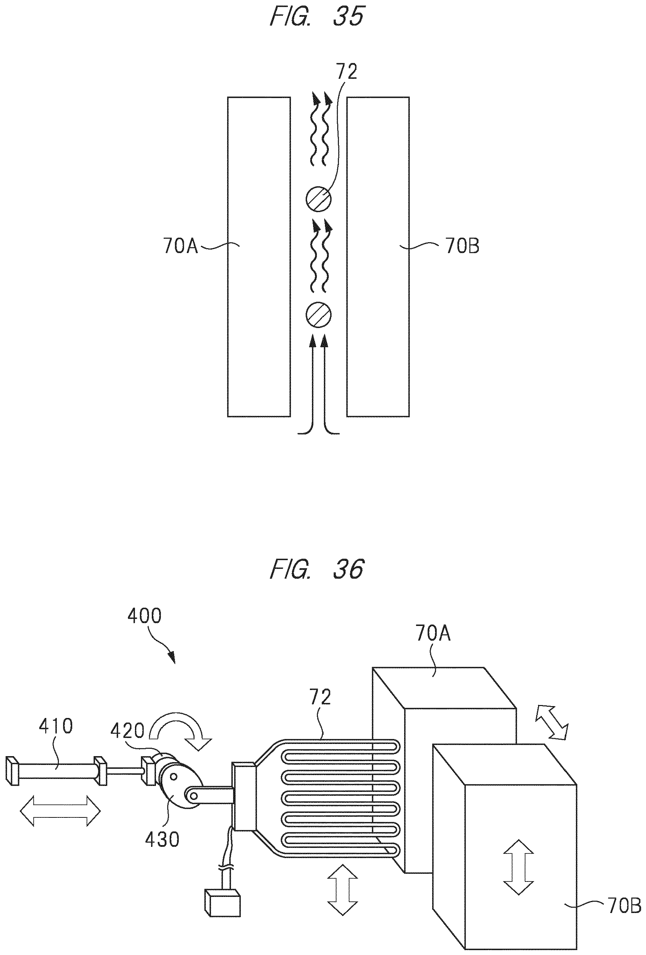

FIG. 35 is a diagram schematically illustrating the "horizontal configuration".

In FIG. 35, the mold 70A and the mold 70B are placed to face each other in the horizontal direction. And, the heater 72 is inserted in a gap between the mold 70A and the mold 70B. If the heater 72 is heated in this state, cold air flows into the gap from a lower side, and the flowed cold air is warmed by the heater 72. The warmed air flows toward an upper side of the gap. In this manner, by the heating of the heater 72 inserted in the gap between the mold 70A and the mold 70B, convection is generated in the air existing in the gap, and as a result, a temperature difference is caused between the lower side and the upper side of the gap. That is, a temperature distribution is generated in the gap. Once such a temperature distribution is generated in the gap, the uniform heating is not possible, and as a result, this adversely affects the welding of the melted region. Therefore, even in the heating of the heater 72 inserted in the gap between the mold 70A and the mold 70B, the small temperature difference in the gap is desirable. That is, it is desirable to suppress the air convection that causes non-uniformity of the temperature in the gap.

### <<First Solution>>

Accordingly, the present embodiment adopts a contrivance to improve temperature uniformity in the gap between the mold 70A and the mold 70B. This contrivance point will be described below.

FIG. 36 is a diagram for explaining a first solution.

In FIG. 36, a swinging mechanism 400 is connected to the heater 72 that is insertable into the gap between the mold 70A and the mold 70B. This swinging mechanism 400 includes, for example, a forward/backward movement mechanism 410 configured to move the heater in a forward or backward direction; a rotatable motor 420; and an eccentric cam 430 attached to the motor. As a result, the heater 72 connected to the swinging mechanism 400 is capable of a swing action (swinging movement).

That is, the first solution is to connect the swinging mechanism 400 with the heater 72 to perform the swinging action to the heater 72 inserted in the gap between the mold 70A and the mold 70B. As a result, according to the present embodiment, the air existing in the gap is agitated by the heater 72 under the swinging action, and therefore, it is possible to suppress the non-uniformity of the temperature due to the convection.

However, in the first solution described above, it is necessary to provide the swinging mechanism 400 in the molding-product manufacturing apparatus, and therefore, a manufacturing cost of the molding-product manufacturing apparatus increases. In addition, since the heater 72 is caused to perform the swinging action, it is necessary to secure a distance between the heater 72 and the mold 70A/mold 70B in order to avoid a collision between the heater 72 and the mold 70A/mold 70B. This means that the heater 72 and the partial molding product fitted in the mold 70A and the partial molding product fitted in the mold 70B separate from each other. As a result, there is room for improvement against failure to efficiently use thermal energy generated by the heater 72.

### <<Second Solution>>

For this reason, the present embodiment adopts a further contrivance to improve the temperature uniformity in the gap between the mold 70A and the mold 70B. This contrivance point will be described below.

A basic idea of the second solution is an idea of improving the temperature uniformity in the gap by providing a convection suppression member for suppressing the air convection that causes the temperature non-uniformity in the gap between the mold 70A and the mold 70B.

### <<<First Specific Configuration Example>>>

A specific configuration that embodies this basic idea will be described below.

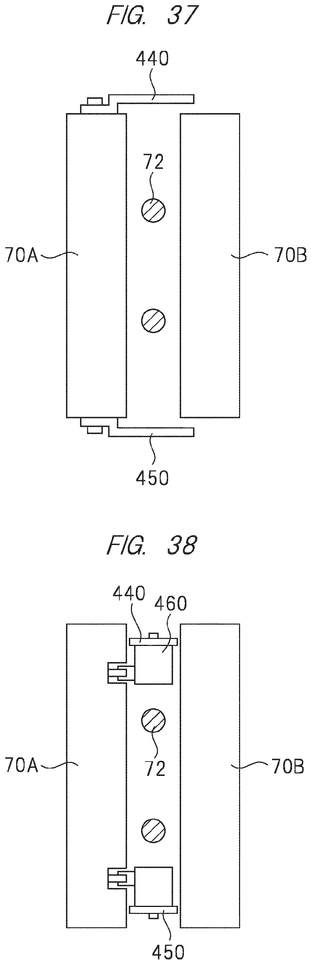

FIG. 37 is a diagram illustrating a first specific configuration example.

As illustrated in FIG. 37, the mold 70A is provided with a cover 440 to cover the upper side of the gap, and a cover 450 to cover the lower side of the gap. As a result, the cover 450 suppresses inflow of the cold air from the lower side of the gap, and the cover 440 suppresses outflow of the warm air from the upper side of the gap. As a result, the cover 440 and the cover 450 suppress the air convection due to the heat generated from the heater 72 inserted in the gap. That is, the cover 440 and the cover 450 act as the convection suppression member for suppressing the convection due to the heat supplied from the heater. Thus, according to the first specific configuration example, it is possible to improve the temperature uniformity in the gap.

Note that it is desirable to provide both the cover 440 and the cover 450 as illustrated in 37 from a viewpoint of suppressing the convection. However, even a configuration with only either one of the cover 440 and the cover 450 can provide the effect of suppressing the convection. In addition, in FIG. 37, the configuration in which the mold 70A is provided with the cover 440 and the cover 450 is described. However, the configuration is not limited to this. For example, a configuration in which the mold 70B is provided with the cover 440 and the cover 450 is also applicable.

### <<<Second Specific Configuration Example>>>

FIG. 38 is a diagram illustrating a second specific configuration example.

As illustrated in FIG. 38, an outer frame body 460 to be placed outside the heater 72 is inserted together with the heater 72 into the gap. That is, the second specific configuration example is configured so that a slide unit being a unified structure made of the heater 72 and the outer frame body 460 placed outside the heater 72 is slid by a heater slide mechanism. At this time, as can be seen from FIG. 38, the outer frame body 460 acts as the convection suppression member for suppressing the convection due to the heat supplied from the heater. In addition, the attachment of the cover 440 and the cover 450 for preventing the convection to the outside of this outer frame body 460 can further enhance the effect of suppressing the convection. Thus, according to the second specific configuration example, it is possible to improve the temperature uniformity in the gap.

While the outer frame body 460 has a function acting as the convection suppression member, this outer frame body 460 also has another function. Another function of the outer frame body 460 will be described. For example, the following advantages can be provided when the heater 72 is placed in the middle of the outer frame body 460 in a thickness direction. Specifically, when the partial molding product protrudes because of not properly being fitted in the mold or when a foreign object protrudes from the mold, the outer frame body 460 collides earlier than the heater 72. In this case, torque anomaly or the like occurs in the heater slide mechanism that slides the outer frame body 460. Therefore, the heater 72 can be protected if this torque anomaly or the like is detected to stop the apparatus. That is, the outer frame body 460 has not only the function acting as the convection suppression member but also the function of protecting the heater 72.

Note that the slide unit may be provided in the mold 70A or the stage 75A of the molding-product manufacturing apparatus 200, or may be provided independently outside the molding-product manufacturing apparatus 200. However, it is desirable to attach the slide unit after a groove cut for a guide mechanism such as a linear guide is formed on a parting surface of the mold 70A. In this manner, a heater position can be controlled at a location closer to the molding product. In addition to this, designing is possible without considering the influence of the misalignment (deflection) of the support portion, and this designing can shorten the distance between the parting surface of the mold 70A and the outer frame body 460 to further enhance the effect of the convection suppression member.

As described above, according to the second solution based on the basic idea of providing the convection suppression member, even in the case without the swinging mechanism for swinging the heater 72, it is possible to improve the temperature uniformity in the gap between the mold 70A and the mold 70B by the simple configuration as described in the first specific configuration example or the second specific configuration example. That is, it can be said that the second solution has the exceptional technical significance in that the large effect can be provided without increasing the cost.

### <Third Contrivance Point>

Subsequently, a third contrivance point will be described.

For example, if the heater 72 is made of the heating plate that is the contact heater, the heater 72 needs to evenly contact both the partial molding product 250A fitted in the mold 70A and the partial molding product 250B fitted in the mold 70B. Therefore, when the state between the mold 70A and the mold 70B changes from the "mold-opening" state to the "mold-closing" state, it is desirable to maintain the heater 72 to be placed at a center position between the mold 70A and the mold 70B.

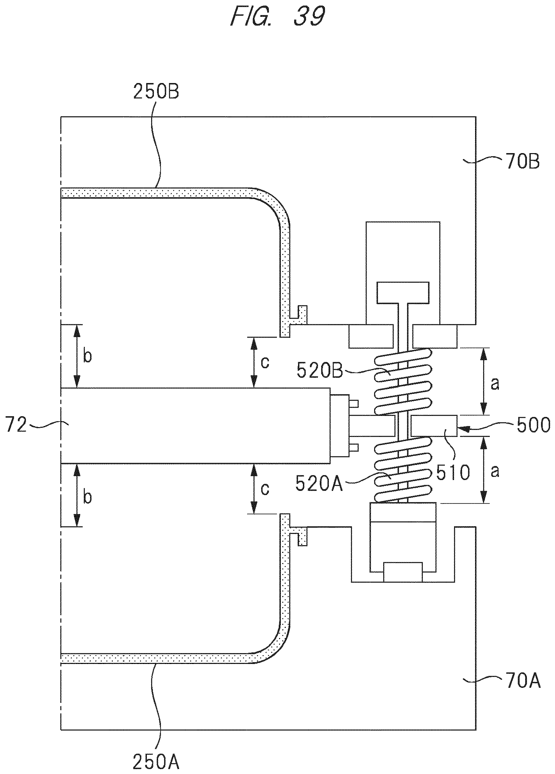

Accordingly, for example, as illustrated in FIG. 39, a centering mechanism 500 is provided between the mold 70A and the mold 70B. This centering mechanism 500 has a connection portion 510 connected to the heater 72, a spring 520A provided on the mold 70A side, and a spring 520B provided on the mold 70B side. In this centering mechanism 500, a spring constant of the spring 520A and a spring constant of the spring 520B are set to a same value. Thus, when the state between the mold 70A and the mold 70B changes from the "mold-opening" state to the "mold-closing" state, the heater 72 fixed to the connection portion 510 is maintained to be placed at the center position between the mold 70A and the mold 70B. That is, dimensions "a", "b", and "c" illustrated in FIG. 39 are each maintained to be the same value. As a result, according to the third contrivance point, the heater 72 made of the heating plate can be evenly brought into contact with both the partial molding product 250A and the partial molding product 250B at the same timing and pressing force. In the contact heater, the transfer of the heat between the partial molding products 250A and 250B and the heater 72 depends on the pressing pressure. Therefore, according to the third contrivance point, it is possible to uniformly heat the portion that becomes the joint region between the partial molding product 250A and the partial molding product 250B by the heater 72.

### <<Application to Contactless Heater>>

It is also effective to apply the centering mechanism 500 described above to the molding-product manufacturing apparatus including the heater 72 made of not the contact heater but the contactless heater.

This point will be described below.

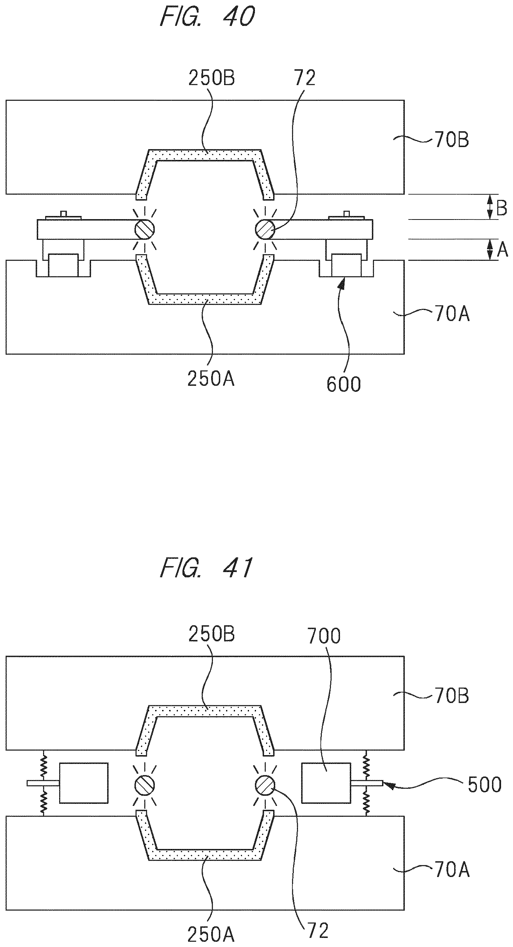

For example, FIG. 40 is a diagram illustrating an example of a fixing mechanism for fixing the heater 72 made of the contactless heater. In a fixing mechanism 600 illustrated in FIG. 40, for example, a distance between the heater 72 and the mold 70A is mechanically adjusted by a shim or the like. On the other hand, the heater 72 and the mold 70B are adjusted by the control of the contact/contactless controller 71 that moves the mold 70B. That is, in the configuration illustrated in FIG. 40, the distance ("A") between the heater 72 and the mold 70A and the distance ("B") between the heater 72 and the mold 70B are adjusted by different mechanisms from each other. As a result, in the configuration illustrated in FIG. 40, it is difficult to equalize the distance between the heater 72 and the mold 70A and the distance between the heater 72 and the mold 70B. This means that it is difficult for the heater 72 to uniformly heat the partial molding product 250A fitted in the mold 70A and the partial molding product 250B fitted in the mold 70B.

Accordingly, for example, it is effective to utilize the centering mechanism 500 which is the third contrivance point, as the fixing mechanism for fixing the heater 72 made of the contactless heater.

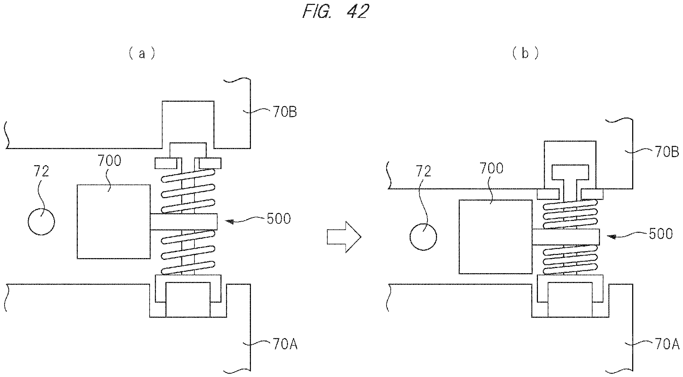

FIG. 41 is a diagram illustrating a configuration example adopting the centering mechanism which is the third contrivance point as the fixing mechanism for fixing the heater 72 made of the contactless heater. In addition, FIG. 42(a) and FIG. 42(b) are diagrams each schematically illustrating operation of the centering mechanism illustrated in FIG. 41. Note that the partial molding products 250A and 250B are omitted in FIG. 42(a) and FIG. 42(b).

In FIG. 41, the centering mechanism 500 is connected to a frame 700, and the heater 72 fixed to the frame 700 is placed at a center position of this frame 700. In the case of this configuration, since the centering mechanism 500 which is the third contrivance point is connected to the frame 700, it is possible to equalize a distance between the frame 700 and the mold 70A and a distance between the frame 700 and the mold 70B (FIG. 42(a) and FIG. 42(b)). And, since the heater 72 is placed at the center position of the frame 700, the distance between the heater 72 and the partial molding product 250A fitted in the mold 70A is naturally equal to the distance between the heater 72 and the partial molding product 250A fitted in the mold 70B. As a result, it is possible to uniformly heat the partial molding product 250A fitted in the mold 70A and the partial molding product 250B fitted in the mold 70B, by connecting the centering mechanism 500 which is the third contrivance point to the frame 700 fixing the heater 72 made of the contactless heater.

Furthermore, when the heater 72 is made of the contactless heater, as also described above in the second contrivance point, it is desirable in the gap between the mold 70A and the mold 70B to provide the convection suppression member for suppressing the temperature distribution due to the air convection, from a viewpoint of the uniform heating.

In regard to this point, in a configuration illustrated in FIG. 41, the frame 700 acts as the convection suppression member. That is, the frame 700 is adopted to fix the heater 72 made of the contactless heater, and the configuration (illustrated in FIG. 41) in which the centering mechanism 500 which is the third contrivance point is connected to this frame 700 is adopted. This case can provide a remarkable effect that achieves the uniform heating on the partial molding product 250A fitted in the mold 70A and on the partial molding product 250B fitted in the mold 70B because of synergistic factors that are a factor in which the heater 72 can be placed at the center of the mold 70A and the mold 70B by the centering mechanism 500 and a factor in which the frame 700 itself acts as the convection suppression member.

Furthermore, when the "mold-closing" state is maintained until the mold 70A and the mold 70B contact the frame 700, the gap between the heater 72 and the partial molding products 250A and 250B can be reduced, and besides, there is no gap where the air stays, and therefore, the convection suppression effect can be further enhanced. In addition, since temperature of air in the frame 700 increases to decrease heat release from the partial molding products 250A and 250B to the air, the efficiency of heating is further increased.

### <<Modification Example>>

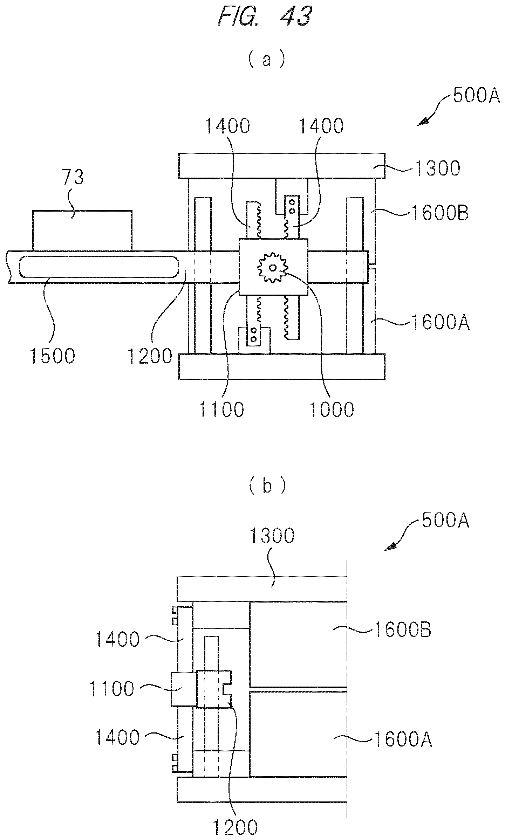

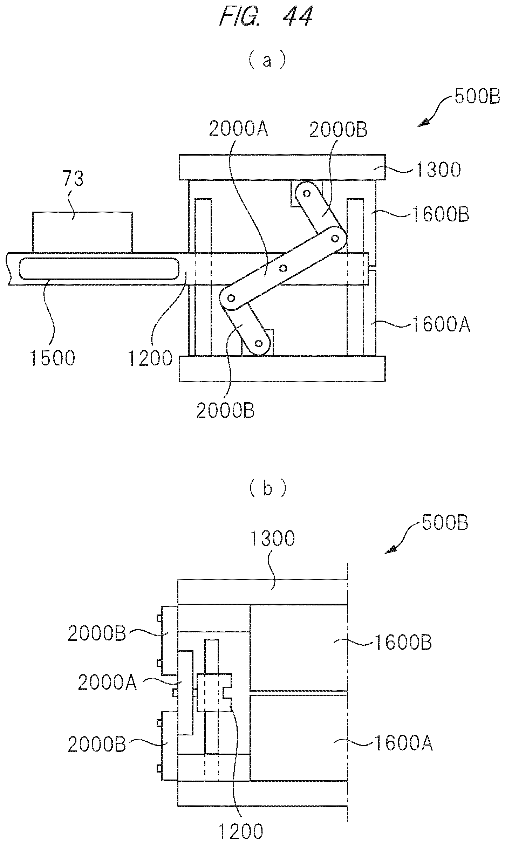

As the centering mechanism 500, for example, the spring-type centering mechanism has been exemplified and described. However, the centering mechanism 500 is not limited to this. For example, a rack-and-pinion type centering mechanism 500A as illustrated in FIG. 43(a) and FIG. 43(b) or a link-mechanism type centering mechanism 500B as illustrated in FIG. 44(a) and FIG. 44(b) can be adopted.

FIG. 43(a) is a front view of the rack-and-pinion type centering mechanism 500A, and FIG. 43(b) is a side view of the rack-and-pinion type centering mechanism 500A.

In FIG. 43(a) and FIG. 43(b), a gear 1000 is housed in a gearbox 1100, and the gearbox 1100 is fixed to a guide rail 1200. To the guide rail 1200, a frame 1500 including a heater and the heater slide mechanism 73 that drives the frame 1500 including the heater are connected. Here, at time of movement of a mold platen 1300, a rack 1400 rotates the gear 1000, and the guide rail 1200, to which the frame 1500 including the heater is attached, moves to be always at a center between a mold 1600A and a mold 1600B. Thus, according to the rack-and-pinion type centering mechanism 500A, it is possible to place the frame 1500 including the heater at the center position between the mold 1600A and the mold 1600B.

FIG. 44 (a) is a plan view of the link-mechanism type centering mechanism 500B, and FIG. 44 (b) is a side view of the link-mechanism type centering mechanism 500B.

In FIG. 44(a) and FIG. 44(b), at time of movement of the mold platen 1300, an angle between a long link 2000A and a short link 2000B changes, the guide rail 1200, to which the frame 1500 including the heater and the heater slide mechanism 73 that drives the frame 1500 including the heater are connected, moves to be always at the center between the mold 1600A and the mold 1600B. Thus, according to the link-mechanism type centering mechanism 500B, it is possible to place the frame 1500 including the heater at the center position between the mold 1600A and the mold 1600B.

In the rack-and-pinion type centering mechanism 500A and the link-mechanism type centering mechanism 500B, the guide rail 1200 placed at the center of the mold is designed to be always placed at the center at the time of the opening/closing of the mold. Thus, it is possible to provide the same effect as the spring-type centering mechanism 500. In this case, note that the guide rail 1200, the heater slide mechanism 73, the gearbox 1100, the gear 1000, and the rack 1400 or the like that configure the rack-and-pinion type centering mechanism 500A, and the long link 2000A and the short link 2000B or the like that configure the link-mechanism type centering mechanism 500B need to be placed outside the mold 1600A and the mold 1600B in a planar direction so as not to interfere with the mold 1600A and the mold 1600B at the time of the "mold-closing" state (see FIG. 43(b) and FIG. 44(b)) .

In the foregoing, the invention made by the inventors of the present invention has been concretely described on the basis of the embodiments. However, it is needless to say that the present invention is not limited to the foregoing embodiments, and various modifications can be made within the scope of the present invention.

### EXPLANATION OF REFERENCE SIGNS

- 1A: Partial molding product
- 1B: Partial molding product
- 2A: Partial molding product
- 2B: Partial molding product
- 10: Unified molding product
- 20A: Mold
- 20B: Mold
- 30: Mold closing apparatus
- 31: Movable platen
- 32: Movable mold
- 33: Fixed mold
- 34: Hot runner manifold
- 35: Fixed platen
- 36: Screw head (including a backflow prevention ring)
- 37: Screw
- 38: Cylinder
- 39: Heater
- 40: Hopper
- 41: Injection apparatus
- 45: Unified molding product
- 45A: Partial molding product
- 45B: Partial molding product
- 50A: Partial molding product
- 50B: Partial molding product
- 50: Unified molding product
- 51: Tie bar
- 52: Movable platen
- 53: Fixed platen
- 54: Movable mold
- 55: Fixed mold
- 56: Hot runner manifold
- 57: Screw head (including a backflow prevention ring)
- 58: Screw
- 59: Cylinder
- 60: Heater
- 61: Hopper
- 62: Chuck
- 70A: Mold
- 70B: Mold
- 71: Contact/Contactless controller
- 72: Heater
- 73: Heater slide mechanism
- 74: Heater slide controller
- 75A: Mold mounting portion
- 75B: Mold mounting portion
- 80A: Chuck
- 80B: Chuck
- 81: Partial core
- 82: Air cylinder
- 83A: Partial core
- 83B: Partial core
- 84A: Air cylinder
- 84B: Air cylinder
- 90: Flange
- 91: Monitor
- 92A: Imager
- 92B: Imager
- 93: Monitoring controller
- 95: Oil hydraulic projection pin
- 96: Ejector pin
- 100: Injection molding apparatus
- 150: "HP-IWM" system
- 160: Injection molding apparatus
- 160A: Extraction apparatus
- 160B: Conveyor
- 170: Injection molding apparatus
- 170A: Extraction apparatus
- 170B: Conveyor
- 180: Robot arm
- 190: Conveyor
- 200: Molding-product manufacturing apparatus
- 250: Unified molding product
- 250A: Partial molding product
- 250B: Partial molding product
- 300: Notch portion
- 400: Swinging mechanism
- 410: Forward/backward movement mechanism
- 420: Motor
- 430: Eccentric cam
- 440: Cover
- 450: Cover
- 460: Outer frame body
- 500: Centering mechanism
- 500A: Centering mechanism
- 500B: Centering mechanism
- 510: Connection portion
- 520A: Spring
- 520B: Spring
- 600: Fixing mechanism
- 700: Frame
- 1000: Gear
- 1100: Gearbox
- 1200: Guide rail
- 1300: Mold platen
- 1400: Rack
- 1500: Frame (including a heater)
- 1600A: Mold
- 1600B: Mold
- 2000A: Long link
- 2000B: Short link

## Claims

1. An apparatus of manufacturing a resin molding product comprising:
a first mold mounting portion being capable of mounting a first mold thereon, the first mold where a first portion configuring the resin molding product is placed;
a second mounting portion being placed at a position facing the first mold mounting portion, and being capable of mounting a second mold thereon, the second mold where a second portion configuring the resin molding product is placed; and
a heater being movable to be inserted in a cavity formed by the first mold and the second mold, and partially melting and joining the first portion and the second portion,
wherein a notch portion is provided in at least one of the first mold and the second mold, and
the heater and the notch portion overlap in plan view when the heater moves to outside of the cavity.

2. An apparatus of manufacturing a resin molding product comprising:
a first mold mounting portion being capable of mounting a first mold thereon, the first mold where a first portion configuring the resin molding product is placed;
a second mounting portion being placed at a position facing the first mold mounting portion, and being capable of mounting a second mold thereon, the second mold where a second portion configuring the resin molding product is placed;
a heater being movable to be inserted in a cavity formed by the first mold and the second mold, and partially melting and joining the first portion and the second portion; and
a heater swinging portion configured to swing the heater.

3. An apparatus of manufacturing a resin molding product comprising:
a first mold mounting portion being capable of mounting a first mold thereon, the first mold where a first portion configuring the resin molding product is placed;
a second mounting portion being placed at a position facing the first mold mounting portion, and being capable of mounting a second mold thereon, the second mold where a second portion configuring the resin molding product is placed;
a heater being movable to be inserted in a cavity formed by the first mold and the second mold, and partially melting and joining the first portion and the second portion; and
a convection suppression member suppressing convection due to heat generated from the heater.

4. The apparatus of manufacturing the resin molding product according to claim 3,
wherein the apparatus of manufacturing the resin molding product includes a heater slide mechanism configured to slide the heater,
the heater slide mechanism is a mechanism sliding a slide unit including the heater and an outer frame body placed outside the heater, and
the outer frame body acts as the convection suppression member.

5. The apparatus of manufacturing the resin molding product according to claim 3 or 4,
wherein the first mold mounting portion and the second mold mounting portion are placed to face each other in a horizontal direction.

6. An apparatus of manufacturing a resin molding product comprising:
a first mold mounting portion being capable of mounting a first mold thereon, the first mold where a first portion configuring the resin molding product is placed;
a second mounting portion being placed at a position facing the first mold mounting portion, and being capable of mounting a second mold thereon, the second mold where a second portion configuring the resin molding product is placed;
a heater being movable to be inserted in a cavity formed by the first mold and the second mold, and partially melting and joining the first portion and the second portion;
a first monitor configured to be able to monitor a state of placement of the first portion; and
a second monitor configured to be able to monitor a state of placement of the second portion.

7. The apparatus of manufacturing the resin molding product according to claim 6,
wherein the first monitor includes a first imager being capable of imaging the state of placement of the first portion, and
the second monitor includes a second imager being capable of imaging the state of placement of the second portion.

8. The apparatus of manufacturing the resin molding product according to any one of claims 1 to 7,
wherein the first mold mounting portion is fixed while the second mold mounting portion is movably configured.

9. A method of manufacturing a resin molding product comprising steps of:
(a) placing a first portion configuring the resin molding product, in a first mold;
(b) placing a second portion configuring the resin molding product, in a second mold;
(c) inserting a heater between the first mold and the second mold;
(d) partially heating the first portion and the second portion by the heater;
(e) after the step (d), evacuating the heater;
(f) after the step (e), welding the first portion and the second portion; and
(g) extracting the resin molding product including the first portion and the second portion.

10. The method of manufacturing the resin molding product according to claim 9, comprising steps of, before the step (c):
fixing the first portion placed in the first mold by a first chuck; and
fixing the second portion placed in the second mold by a second chuck, and
comprising a step of, after the step (f) and before the step (g), releasing the fixing of the first portion by the first chuck and the fixing of the second portion by the second chuck.

11. The method of manufacturing the resin molding product according to claim 9, comprising steps of, before the step (c):
monitoring a state of placement of the first portion; and
monitoring a state of placement of the second portion.

12. The method of manufacturing the resin molding product according to claim 11,
wherein the step of monitoring the state of placement of the first portion uses a first imager, and
the step of monitoring the state of placement of the second portion uses a second imager.

13. The method of manufacturing the resin molding product according to any one of claims 9 to 12,
wherein the heater is made of a contactless heater, and
the step (d) is performed in a state in which the heater is not in contact with the first portion and the second portion.

14. The method of manufacturing the resin molding product according to any one of claims 9 to 12,
wherein the heater is made of a heating plate, and
the step (d) is performed in a state in which the heater is in contact with the first portion and the second portion.

15. A mold being mountable on an apparatus of manufacturing a resin molding product, the apparatus being configured to manufacture the resin molding product by partially welding and bonding a first portion and a second portion configuring the resin molding product by heat supplied from a heater, the mold comprising:
a notch portion being capable of placing a part of the heater therein.

16. A mold being mountable on an apparatus of manufacturing a resin molding product, the apparatus being configured to manufacture the resin molding product by partially welding and bonding a first portion and a second portion configuring the resin molding product by heat supplied from a heater, the mold comprising:
a convection suppression member suppressing convection due to heat generated from the heater.

17. The mold according to claim 16,
wherein the convection suppression member is a cover attached to the mold.
